# EUROPEAN PATENT APPLICATION

(11) **EP 4 614 275 A1**
(43) Date of publication of application: **10.09.2025**
(21) Application number: 23900878.2
(22) Date of filing: 18.10.2023
(51) Int. Cl.: G06F 1/16, G06F 1/18, G06F 3/041

(54) **ELECTRONIC DEVICE COMPRISING STRUCTURE FOR REDUCING DAMAGE TO ELECTROMAGNETIC INDUCTION PANEL**

(30) Priority: 05.12.2022 KR 20220168139; 20.12.2022 KR 20220179401
(71) Applicant: Samsung Electronics Co., Ltd., Suwon-si, Gyeonggi-do 16677 (KR)
(72) Inventor: PARK, Myeongsil, Suwon-si Gyeonggi-do 16677 (KR); KIM, Seonghoon, Suwon-si Gyeonggi-do 16677 (KR); RYU, Bummoo, Suwon-si Gyeonggi-do 16677 (KR); YOON, Jeonghyun, Suwon-si Gyeonggi-do 16677 (KR); YOON, Chungki, Suwon-si Gyeonggi-do 16677 (KR); JUNG, Bowon, Suwon-si Gyeonggi-do 16677 (KR); CHOI, Seongdae, Suwon-si Gyeonggi-do 16677 (KR)
(74) Representative: Gulde & Partner
(86) International application number: PCT/KR2023/016202
(87) International publication number: WO 2024/122857

(57) **Abstract**

An electronic device according to an embodiment comprises: a first housing; a second housing; a hinge structure rotatably connecting the first housing and the second housing; a display; and an electromagnetic induction panel disposed between the display and the hinge structure and including a first folding region, which can be deformed, by the hinge structure and a first flat region, which is connected to the first folding region and disposed between the display and the one surface of the first housing. The electromagnetic induction panel further includes: an insulating layer; at least one first layer disposed above the insulating layer; and at least one second layer disposed below the insulating layer, wherein the thickness of the at least one second layer in the first folding region is greater than the thickness of the at least one first layer in the first folding region.

## Description

### [Technical Field]

The present disclosure relates to an electronic device comprising a structure for reducing damage to an electromagnetic induction panel.

### [Background Art]

An electronic device may include various components for receiving an input from a user. For example, the electronic device may include an electromagnetic induction panel for receiving an input from an electronic pen disposed adjacent to a display. As a demand of the user is diversified, the electronic device may include a structure in which a size of the display for displaying content may be changed. For example, the electronic device may include a flexible display that is foldable.

The above-described information may be provided as a related art for the purpose of helping understanding of the present disclosure. No claim or determination is raised as to whether any of the above-described descriptions may be applied as a prior art related to the present disclosure.

### [Disclosure]

### [Technical Solution]

An electronic device according to an embodiment may comprise a first housing. According to an embodiment, the electronic device may comprise a second housing. According to an embodiment, the electronic device may comprise a hinge structure that, by rotatably connecting the first housing and the second housing, allows the first housing and the second housing to transition between a folded state in which a surface of the first housing faces a surface of the second housing, and an unfolded state in which a direction in which the surface of the first housing faces is the same as a direction in which the surface of the second housing faces. According to an embodiment, the electronic device may comprise a display disposed above the surface of the first housing and the surface of the second housing across the hinge structure. According to an embodiment, the electronic device may comprise an electromagnetic induction panel configured to receive an input from an electronic pen, the electromagnetic induction panel including a first folding region, disposed between the display and the hinge structure, deformable by the hinge structure, and a first planar region, connected to the first folding region, disposed between the display and the surface of the first housing. According to an embodiment, the electromagnetic induction panel may include an insulating layer disposed in the first folding region and the first planar region. According to an embodiment, the electromagnetic induction panel may include at least one first layer, including a first conductive pattern, disposed above the insulating layer. According to an embodiment, the electromagnetic induction panel may include at least one second layer, including a second conductive pattern, disposed below the insulating layer. According to an embodiment, a thickness of the at least one second layer in the first folding region may be thicker than a thickness of the at least one first layer in the first folding region.

An electronic device according to an embodiment may comprise a first housing including a first surface and a second surface opposite to the first surface. According to an embodiment, the electronic device may comprise a second housing including a third surface and a fourth surface opposite to the third surface. According to an embodiment, the electronic device may comprise a hinge structure that, by rotatably connecting the first housing and the second housing, allows the first housing and the second housing to transition between a folded state in which the first surface faces the third surface, and an unfolded state in which a direction in which the first surface faces is the same as a direction in which the third surface faces. According to an embodiment, the electronic device may comprise a display, disposed above the first surface and the third surface across the hinge structure, being foldable with respect to a folding axis. According to an embodiment, the electronic device may comprise an electromagnetic induction panel configured to receive an input from an electronic pen, the electromagnetic induction panel including a first folding region disposed between the display and the hinge structure, deformable by the hinge structure, and a first planar region, connected to the first folding region, disposed between the display and the first surface. According to an embodiment, the electromagnetic induction panel may include an insulating layer disposed in the first folding region and the first planar region. According to an embodiment, the electromagnetic induction panel may include at least one first layer, including a plurality of first conductive patterns extending along a direction parallel to the folding axis, disposed above the insulating layer. According to an embodiment, the electromagnetic induction panel may include at least one second layer, including a plurality of second conductive patterns extending along a direction perpendicular to the folding axis, disposed below the insulating layer. According to an embodiment, a thickness of the at least one second layer in the first folding region may be thicker than a thickness of the at least one first layer in the first folding region.

### [Description of the Drawings]

FIG. 1 is a block diagram of an electronic device in a network environment, according to various embodiments.
FIG. 2A illustrates an example of an unfolded state of an exemplary electronic device, according to an embodiment.
FIG. 2B illustrates an example of a folded state of an exemplary electronic device, according to an embodiment.
FIG. 2C is an exploded view of an exemplary electronic device, according to an embodiment.
FIG. 3A is a top plan view of an exemplary electronic device in an unfolded state, according to an embodiment.
FIG. 3B is a cross-sectional view illustrating an example of an exemplary electronic device cut along line A-A' of FIG. 3A, according to an embodiment.
FIG. 3C is a cross-sectional view illustrating an example of cutting an electronic device in a folded state, according to an embodiment.
FIG. 3D is a cross-sectional view illustrating an example of cutting an exemplary electromagnetic induction panel, according to an embodiment.
FIG. 4A is a cross-sectional view illustrating an example of cutting an exemplary electronic device in an unfolded state, according to an embodiment.
FIG. 4B is a cross-sectional view illustrating an example of cutting an exemplary electronic device in a folded state, according to an embodiment.
FIG. 4C is a cross-sectional view illustrating an example of cutting an exemplary electromagnetic induction panel, according to an embodiment.
FIG. 5 is a cross-sectional view illustrating an example of cutting an exemplary electromagnetic induction panel, according to an embodiment.
FIG. 6A is a top plan view of an electronic device in an unfolded state, according to an embodiment.
FIG. 6B is a top plan view of a first conductive pattern of an exemplary electromagnetic induction panel, according to an embodiment.
FIG. 6C is a top plan view of a second conductive pattern of an exemplary electromagnetic induction panel, according to an embodiment.
FIG. 6D is a cross-sectional view illustrating an example of an exemplary electromagnetic induction panel cut along line B-B' of FIG. 6A, according to an embodiment.
FIG. 7 is a top plan view of an electronic device in an unfolded state, according to an embodiment.

### [Mode for Invention]

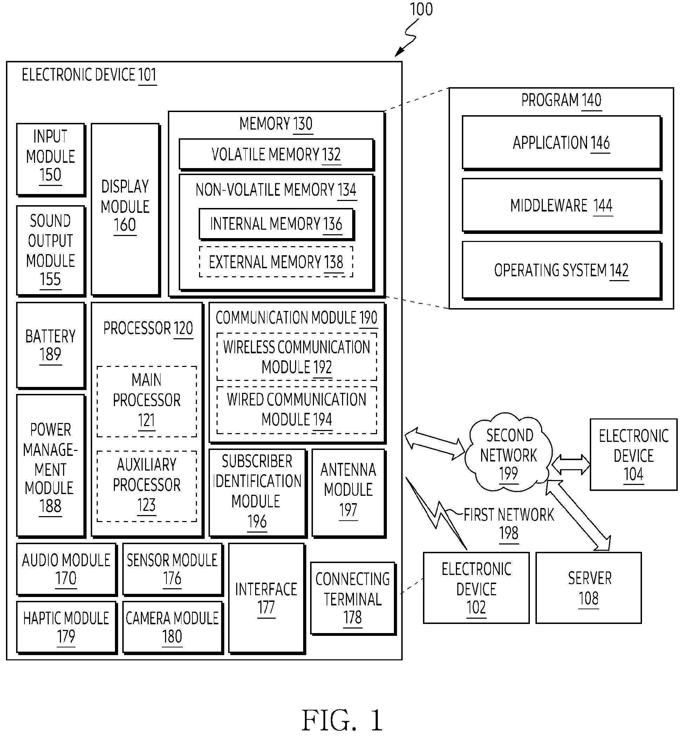

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

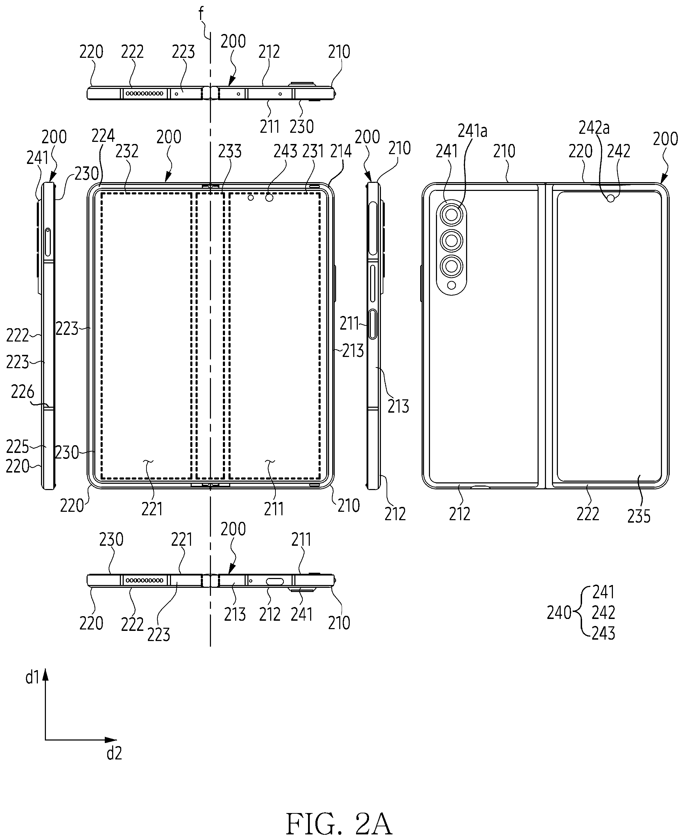

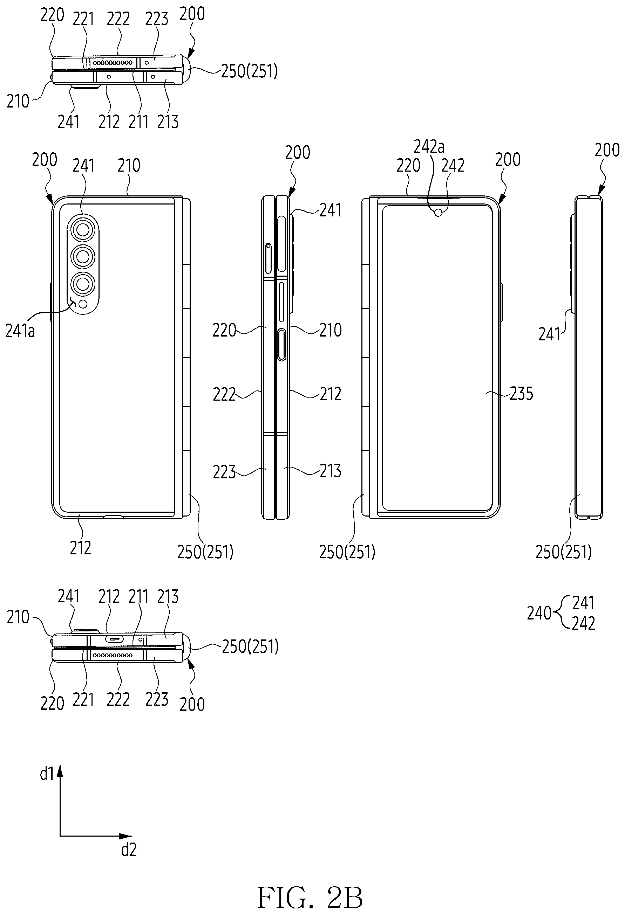

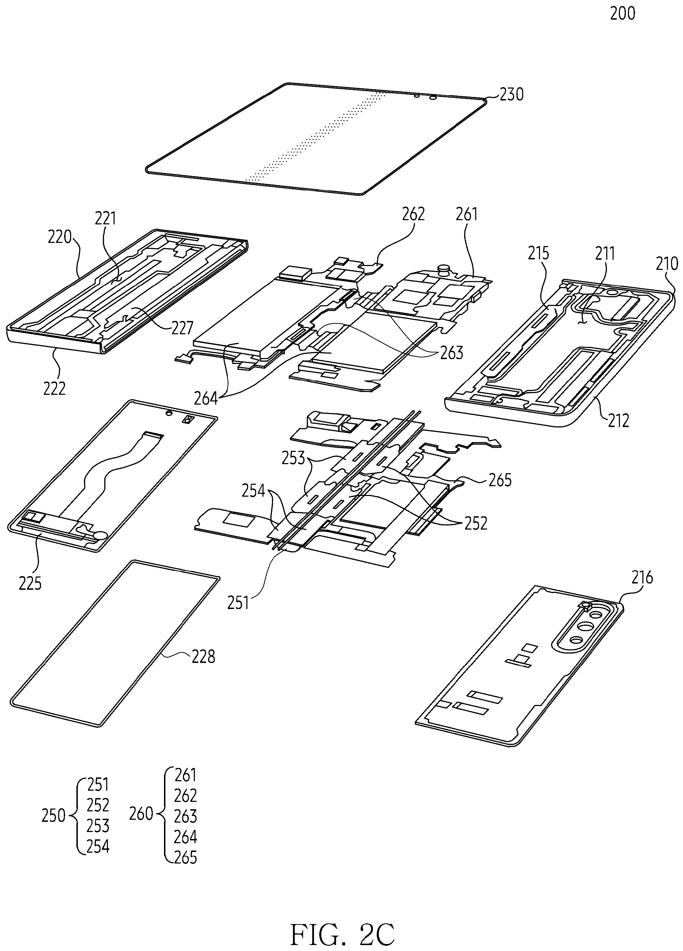

FIG. 2A illustrates an example of an unfolded state of an electronic device, according to an embodiment, FIG. 2B illustrates an example of a folded state of an electronic device, according to an embodiment, and FIG. 2C is an exploded view of an electronic device, according to an embodiment.

Referring to FIGS. 2A, 2B, and 2C, an electronic device 200 (e.g., the electronic device 101 of FIG. 1) may include a first housing 210, a second housing 220, and a display 230, at least one camera 240 (e.g., the camera module 180 of FIG. 1), a hinge structure 250, and/or at least one electronic component 260.

The first housing 210 and the second housing 220 may form at least a portion of an outer surface of the electronic device 200 that may be gripped by a user. The at least a portion of the outer surface of the electronic device 200 defined by the first housing 210 and the second housing 220 may contact a part of a body of the user when the electronic device 200 is used by the user. According to an embodiment, the first housing 210 may include a first surface 211, a second surface 212 facing the first surface 211 and spaced apart from the first surface 211, and a first side surface 213 surrounding at least a portion of the first surface 211 and the second surface 212. The first side surface 213 may connect a periphery of the first surface 211 to a periphery of the second surface 212. The first surface 211, the second surface 212, and the first side surface 213 may define an inner space of the first housing 210. According to an embodiment, the first housing 210 may provide a space formed by the first surface 211, the second surface 212, and the first side surface 213 as a space for disposing components of the electronic device 200.

According to an embodiment, the second housing 220 may include a third surface 221, a fourth surface 222 facing the third surface 221 and spaced apart from the third surface 221, and a second side surface 223 surrounding at least a portion of the third surface 221 and the fourth surface 222. The second side surface 223 may connect a periphery of the third surface 221 to a periphery of the fourth surface 222. The third surface 221, the fourth surface 222, and the second side surface 223 may define an inner space of the second housing 220. According to an embodiment, the second housing 220 may provide a space formed by the third surface 221, the fourth surface 222, and the second side surface 223 surrounding the at least a portion of the third surface 221 and the fourth surface 222 as a space for mounting the components of the electronic device 101. According to an embodiment, the second housing 220 may be coupled to the first housing 210 to be rotatable with respect to the first housing 210.

According to an embodiment, each of the first housing 210 and the second housing 220 may include a first protective member 214 and a second protective member 224. The first protective member 214 and the second protective member 224 may be disposed on the first surface 211 and the third surface 221 along a periphery of the display 230. According to an embodiment, the first protective member 214 and the second protective member 224 may prevent an inflow of a foreign substance (e.g., dust or moisture) through a gap between the display 230, the first housing 210, and the second housing 220. For example, the first protective member 214 may surround a periphery of a first display region 231 of the display 230, and the second protective member 224 may surround a periphery of a second display region 232 of the display 230. The first protective member 214 may be formed by being attached to the first side surface 213 of the first housing 210, or may be formed integrally with the first side surface 213. The second protective member 224 may be formed by being attached to the second side surface 223 of the second housing 220, or may be integrally formed with the second side surface 223.

According to an embodiment, the first side surface 213 and the second side surface 223 may include a conductive material, a non-conductive material, or a combination thereof. For example, the second side surface 223 may include at least one conductive portion 225 and at least one non-conductive portion 226. The at least one conductive portion 225 may include a plurality of conductive portions spaced apart from each other. The at least one non-conductive portion 226 may be disposed between the plurality of conductive portions. The plurality of conductive portions may be disconnected from each other by the at least one non-conductive portion 226 disposed between the plurality of conductive portions. According to an embodiment, the plurality of conductive portions and a plurality of non-conductive portions may form an antenna radiator together. The electronic device 200 may communicate with an external electronic device through the antenna radiator formed by the plurality of conductive portions and the plurality of non-conductive portions.

The display 230 may be configured to display visual information. According to an embodiment, the display 230 may be disposed on the first surface 211 of the first housing 210 and the third surface 221 of the second housing 220 across the hinge structure 250. For example, the display 230 may include the first display region 231 disposed on the first surface 211 of the first housing, the second display region 232 disposed on the third surface 221 of the second housing, and a third display region 233 disposed between the first display region 231 and the second display region 232. The first display region 231, the second display region 232, and the third display region 233 may form a front surface of the display 230. According to an embodiment, the display 230 may further include a sub-display panel 235 disposed on the fourth surface 222 of the second housing 220. For example, the display 230 may be referred to as a flexible display. According to an embodiment, the display 230 may include a window exposed toward the outside of the electronic device 200. The window may protect a surface of the display 230 and transmit the visual information provided by the display 230 to the outside of the electronic device 200 by including a substantially transparent material. For example, the window may include glass (e.g., ultra-thin glass (UTG)) and/or polymer (e.g., polyimide (PI)), but is not limited thereto.

The at least one camera 240 may be configured to obtain an image based on receiving light from an external subject of the electronic device 200. According to an embodiment, the at least one camera 240 may include first cameras 241, a second camera 242, and/or a third camera 243. The first cameras 241 may be disposed in the first housing 210. For example, the first cameras 241 may be disposed inside the first housing 210, and may be at least partially visible through the second surface 212 of the first housing 210. The first cameras 241 may be supported by a bracket (not illustrated) in the first housing 210. The first housing 210 may include at least one opening 241a overlapping the first cameras 241 when the second surface 212 is viewed from above. The first cameras 241 may obtain an image based on receiving light from the outside of the electronic device 200 through the at least one opening 241a.

According to an embodiment, the second camera 242 may be disposed in the second housing 220. For example, the second camera 242 may be disposed inside the second housing 220 and may be visible through the sub-display panel 235. The second housing 220 may include at least one opening 242a overlapping the second camera 242 when the fourth surface 222 is viewed from above. The second camera 242 may obtain an image based on receiving light from the outside of the electronic device 200 through the at least one opening 242a.

According to an embodiment, the third camera 243 may be disposed in the first housing 210. For example, the third camera 243 may be disposed inside the first housing 210, and may be at least partially visible through the first surface 211 of the first housing 210. For another example, the third camera 243 may be disposed inside the first housing 210, and may be at least partially visible through the first display region 231 of the display 230. The first display region 231 of the display 230 may include at least one opening (not illustrated) overlapping the third camera 243 when the display 230 is viewed from above. The third camera 243 may obtain an image based on receiving light from the outside of the display 230 through the at least one opening.

According to an embodiment, the second camera 242 and the third camera 243 may be disposed below the display 230 (e.g., in a direction toward the inside of the first housing 210 or the inside of the second housing 220). For example, the second camera 242 and the third camera 243 may be under display cameras (UDCs). When the second camera 242 and the third camera 243 are the under display cameras, a region of the display 230 corresponding to positions of each of the second camera 242 and the third camera 243 may not be an inactive region. For example, when the second camera 242 and the third camera 243 are the under-display cameras, the region of the display 230 corresponding to the positions of each of the second camera 242 and the third camera 243 may have a lower pixel density than a pixel density of another region of the display 230. The inactive region of the display 230 may mean a region of the display 230 that does not include a pixel or does not emit light to the outside of the electronic device 200. For another example, the second camera 242 and the third camera 243 may be punch hole cameras. When the second camera 242 and the third camera 243 are the punch hole cameras, a region of the display 230 corresponding to the positions of each of the second camera 242 and the third camera 243 may be an inactive region. For example, when the second camera 242 and the third camera 243 are the punch-hole cameras, the region of the display 230 corresponding to the positions of each of the second camera 242 and the third camera 243 may include an opening that does not include a pixel.

According to an embodiment, the hinge structure 250 may rotatably connect the first housing 210 and the second housing 220. The hinge structure 250 may be disposed between the first housing 210 and the second housing 220 of the electronic device 101 so that the electronic device 200 may be curved, bent, or folded. For example, the hinge structure 250 may be disposed between a portion of the first side surface 213 and a portion of the second side surface 223 facing each other. The hinge structure 250 may be capable of changing the electronic device 200 into an unfolding state in which a direction in which the first surface 211 of the first housing 210 faces and a direction in which the third surface 221 of the second housing 220 faces are substantially the same as each other, or a folding state in which the first surface 211 and the third surface 221 face each other. When the electronic device 200 is in the folded state, the first housing 210 and the second housing 220 may be stacked or overlapped by facing each other.

According to an embodiment, when the electronic device 200 is in the folded state, a direction in which the first surface 211 faces and a direction in which the third surface 221 faces may be different from each other. For example, when the electronic device 200 is in the folded state, the direction in which the first surface 211 faces and the direction in which the third surface 221 faces may be opposite to each other. For another example, when the electronic device 200 is in the folded state, the direction in which the first surface 211 faces and the direction in which the third surface 221 faces may be inclined with respect to each other. In case that the direction in which the first surface 211 faces is inclined with respect to the direction in which the third surface 221 faces, the first housing 210 may be inclined with respect to the second housing 220. However, it is not limited thereto. For example, in the folded state of the electronic device 200, the second surface 212 of the first housing 210 may face the fourth surface 222 of the second housing 220. In case that the second surface 212 and the fourth surface 222 face each other in the folded state of the electronic device 200, the direction in which the first surface 211 faces and the direction in which the third surface 221 faces may be opposite to each other. In case that the second surface 212 and the fourth surface 222 face each other in the folded state of the electronic device 200, the display 230 may be directly exposed to the outside in the folded state of the electronic device 200.

According to an embodiment, the electronic device 200 may be foldable with respect to a folding axis f. The folding axis f may mean a virtual line extending through a hinge cover 251 in a direction (e.g., d1 of FIGS. 2A and 2B) substantially parallel to a longitudinal direction of the electronic device 200, but is not limited thereto. For example, the folding axis f may be a virtual line extending in a direction (e.g., d2 of FIGS. 2A and 2B) substantially perpendicular to the longitudinal direction of the electronic device 200. In case that the folding axis f extends in the direction substantially perpendicular to the longitudinal direction of the electronic device 200, the hinge structure 250 may connect the first housing 210 and the second housing 220 by extending in a direction parallel to the folding axis f. The first housing 210 and the second housing 220 may be rotatable by the hinge structure 250 extending in the direction substantially perpendicular to the longitudinal direction of the electronic device 200.

According to an embodiment, the hinge structure 250 may include the hinge cover 251, a first hinge plate 252, a second hinge plate 253, and a hinge module 254. The hinge cover 251 may surround internal components of the hinge structure 250 and form an outer surface of the hinge structure 250. According to an embodiment, when the electronic device 200 is in the folded state, at least a portion of the hinge cover 251 surrounding the hinge structure 250 may be exposed to the outside of the electronic device 200 through a space between the first housing 210 and the second housing 220. According to an embodiment, when the electronic device 200 is in the unfolded state, the hinge cover 251 may not be exposed to the outside of the electronic device 200 by being covered by the first housing 210 and the second housing 220.

According to an embodiment, the first hinge plate 252 and the second hinge plate 253 may rotatably connect the first housing 210 and the second housing 220 by being coupled to the first housing 210 and the second housing 220, respectively. For example, the first hinge plate 252 may be coupled to a first front bracket 215 of the first housing 210, and the second hinge plate 253 may be coupled to a second front bracket 227 of the second housing 220. As the first hinge plate 252 and the second hinge plate 253 are coupled to the first front bracket 215 and the second front bracket 227, respectively, the first housing 210 and the second housing 220 may be rotatable according to rotation of the first hinge plate 252 and the second hinge plate 253.

The hinge module 254 may rotate the first hinge plate 252 and the second hinge plate 253. For example, the hinge module 254 may rotate the first hinge plate 252 and the second hinge plate 253 with respect to the folding axis f, by including gears that may be rotatable by engaging each other. According to an embodiment, the hinge modules 254 may be plural. For example, the plurality of hinge modules 254 may be disposed by being spaced apart from each other at both ends of the first hinge plate 252 and the second hinge plate 253, respectively.

According to an embodiment, the first housing 210 may include the first front bracket 215 and a first rear bracket 216, and the second housing 220 may include the second front bracket 227 and a second rear bracket 228. The first front bracket 215 and the first rear bracket 216 may support the components of the electronic device 200. The first front bracket 215 may define the first housing 210 by being coupled with the first rear bracket 216. The first rear bracket 216 may define a portion of an outer surface of the first housing 210. The second front bracket 227 and the second rear bracket 228 may support the components of the electronic device 200. The second front bracket 227 may define the second housing 220 by being coupled with the second rear bracket 228. The second rear bracket 228 may define a portion of an outer surface of the second housing 220. For example, the display 230 may be disposed on a surface of the first front bracket 215 and a surface of the second front bracket 227. he first rear bracket 216 may be disposed on another surface of the first front bracket 215 opposite to the surface of the first front bracket 215. The second rear bracket 228 may be disposed on another surface of the second front bracket 227 opposite to the surface of the second front bracket 227. The sub-display panel 235 may be disposed between the second front bracket 227 and the second rear bracket 228.

According to an embodiment, a portion of the first front bracket 215 may be surrounded by the first side surface 213, and a portion of the second front bracket 227 may be surrounded by the second side surface 223. For example, the first front bracket 215 may be integrally formed with the first side surface 213, and the second front bracket 227 may be integrally formed with the second side surface 223. For another example, the first front bracket 215 may be formed separately from the first side surface 213, and the second front bracket 227 may be formed separately from the second side surface 223.

The at least one electronic component 260 may implement various functions for providing to the user. According to an embodiment, the at least one electronic component 260 may include a first printed circuit board 261, a second printed circuit board 262, a flexible printed circuit board 263, a battery 264 (e.g., the battery 189 of FIG. 1), and/or an antenna 265 (e.g., the antenna module 197 of FIG. 1). Each of the first printed circuit board 261 and the second printed circuit board 262 may form an electrical connection between the components in the electronic device 200. For example, components (e.g., the processor 120 of FIG. 1) for implementing an overall function of the electronic device 200 may be disposed on the first printed circuit board 261, and electronic components for implementing some functions of the first printed circuit board 261 may be disposed on the second printed circuit board 262. For another example, components for an operation of the sub-display panel 235 disposed on the fourth surface 222 may be disposed on the second printed circuit board 262.

According to an embodiment, the first printed circuit board 261 may be disposed in the first housing 210. For example, the first printed circuit board 261 may be disposed on a surface of the first front bracket 215. According to an embodiment, the second printed circuit board 262 may be disposed in the second housing 220. The second printed circuit board 262 may be spaced apart from the first printed circuit board 261 and disposed on a surface of the second front bracket 227. The flexible printed circuit board 263 may connect the first printed circuit board 261 and the second printed circuit board 262. For example, the flexible printed circuit board 263 may extend from the first printed circuit board 261 to the second printed circuit board 262.

The battery 264, which is a device for supplying power to at least one component of the electronic device 200, may include, for example, a non-rechargeable primary battery, a rechargeable secondary battery, or a fuel cell. At least a portion of the battery 264 may be disposed on substantially the same plane as the first printed circuit board 261 or the second printed circuit board 262.

The antenna 265 may be configured to receive power or a signal from the outside of the electronic device 200. According to an embodiment, the antenna 265 may be disposed between the first rear bracket 216 and the battery 264. The antenna 265 may include, for example, a near field communication (NFC) antenna, an antenna module, and/or a magnetic secure transmission (MST) antenna. The antenna 265 may perform, for example, short-range communication with an external device or wirelessly transmit and receive the power required for charging.

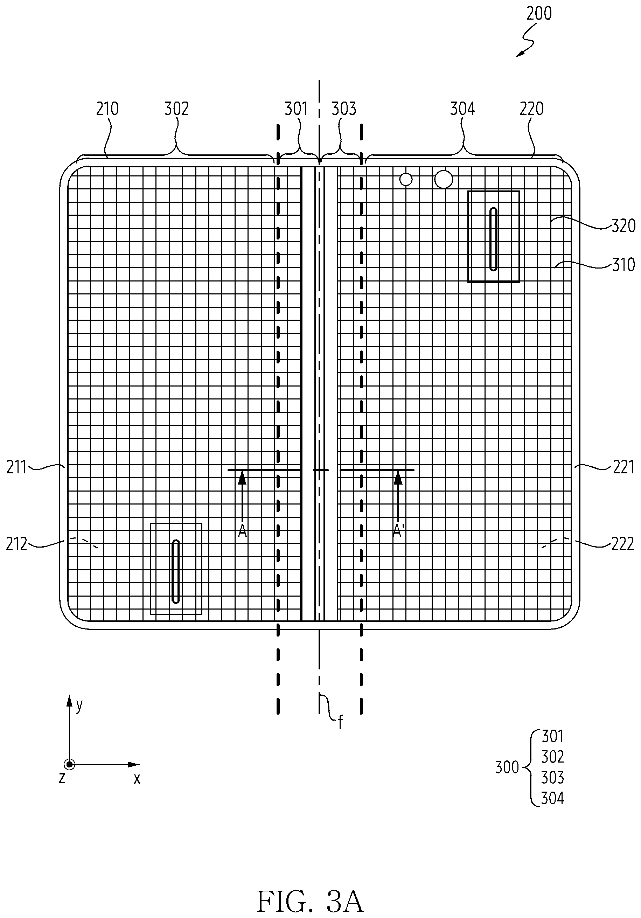

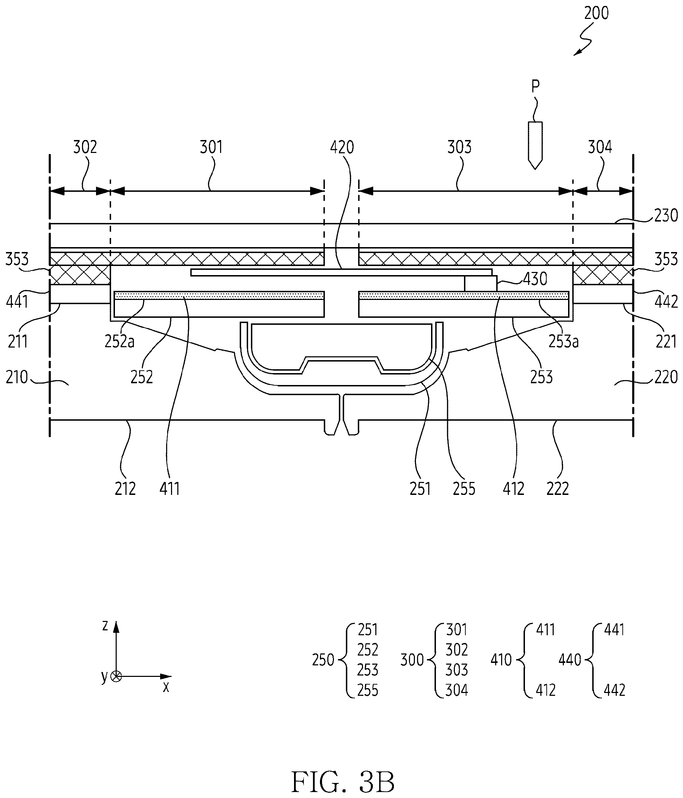

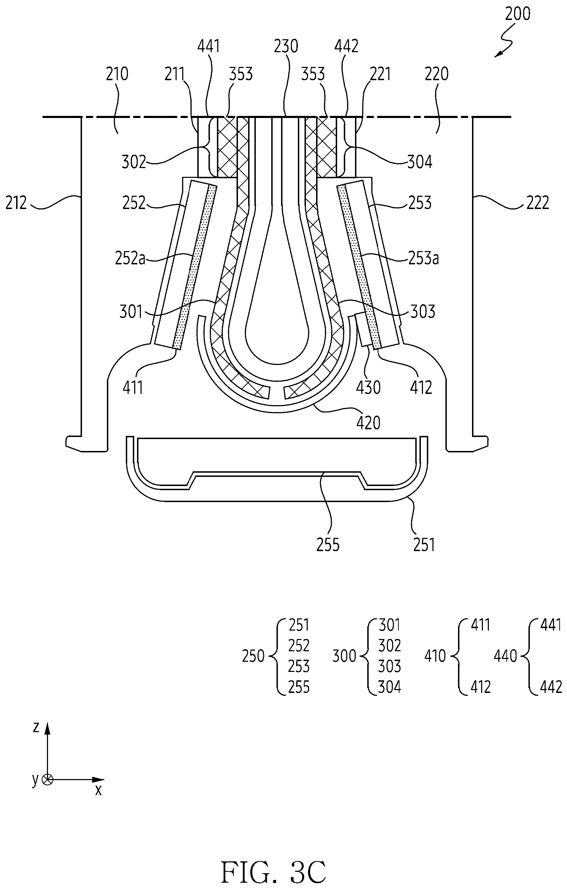

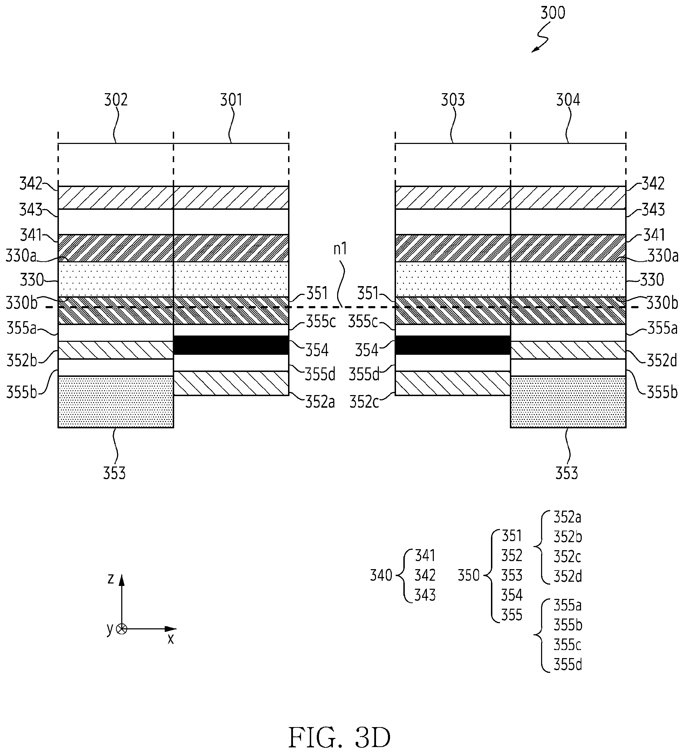

FIG. 3A is a top plan view of an exemplary electronic device in an unfolded state, according to an embodiment, FIG. 3B is a cross-sectional view illustrating an example of an exemplary electronic device cut along line A-A' of FIG. 3A, according to an embodiment, FIG. 3C is a cross-sectional view illustrating an example of cutting an electronic device in a folded state, according to an embodiment, and FIG. 3D is a cross-sectional view illustrating an example of cutting an exemplary electromagnetic induction panel, according to an embodiment.

Referring to FIGS. 3A, 3B, 3C, and 3D, an electronic device 200 according to an embodiment may include a first housing 210, a second housing 220, a display 230, a hinge structure 250, an electromagnetic induction panel 300, a plurality of shielding members 410, a guide member 420, an adhesive member 430, and/or a plurality of supporting members 440.

According to an embodiment, the first housing 210 may include a first surface 211 and a second surface 212. The first surface 211 may face a portion (e.g., the first display region 231 of FIG. 2A) of the display 230. The first surface 211 may support the display 230. The second surface 212 may be opposite to the first surface 211. For example, a direction in which the second surface 212 faces may be opposite to a direction in which the first surface 211 faces. The second surface 212 may mean an outer surface of the first housing 210 opposite to the first surface 211.

According to an embodiment, the second housing 220 may include a third surface 221 and a fourth surface 222. The third surface 221 may face another portion (e.g., the second display region 232 of FIG. 2A) of the display 230. The third surface 221 may support the display 230. The fourth surface 222 may be opposite to the third surface 221. For example, a direction in which the fourth surface 222 faces may be opposite to a direction in which the third surface 221 faces. The fourth surface 222 may mean an outer surface of the second housing 220 opposite to the third surface 221.

According to an embodiment, the display 230 may be supported by the first housing 210 and the second housing 220. The display 230 may be disposed above (e.g., a +z direction) the first housing 210 and the second housing 220 across the hinge structure 250. For example, the display 230 may be disposed above the first surface 211 of the first housing 210 and the third surface 221 of the second housing 220 across the hinge structure 250. For example, the display 230 may be spaced apart from the first surface 211 of the first housing 210 and the third surface 221 of the second housing 220. According to an embodiment, the display 230 may be foldable by movement of the second housing 220 with respect to the first housing 210. For example, as a state of the electronic device 200 changes from the unfolded state in which the direction in which the first surface 211 faces is the same as the direction in which the third surface 221 faces to the folded state in which the first surface 211 and the third surface 221 face each other, the display 230 may be folded. In the folded state of the electronic device 200, at least a portion of the display 230 may be bent with a curvature. For example, as the state of the electronic device 200 changes from the folded state to the unfolded state, the display 230 may be unfolded. In the unfolded state of the electronic device 200, the display 230 may be substantially parallel to the first surface 211 of the first housing 210 and the third surface 221 of the second housing 220.

According to an embodiment, the hinge structure 250 may couple the first housing 210 and the second housing 220 to be rotatable with respect to each other. For example, the hinge structure 250 may define a folding axis f of the display 230. The display 230 may be folded or unfolded with respect to the folding axis f defined by the hinge structure 250. For example, the first housing 210 may be coupled to the second housing 220 to be rotatable with respect to the second housing 220 through the hinge structure 250. For example, the second housing 220 may be coupled to the first housing 210 to be rotatable with respect to the first housing 210 through the hinge structure 250. The hinge structure 250 may fold or unfold the display 230 based on receiving a driving force from the first housing 210 or the second housing 220. According to an embodiment, the hinge structure 250 may include a hinge cover 251, a first hinge plate 252, a second hinge plate 253, and/or a hinge bracket 255.

According to an embodiment, the hinge cover 251 may define an outer surface of the hinge structure 250. The hinge cover 251 may surround components of the hinge structure 250. For example, the hinge cover 251 may surround at least a portion of the first hinge plate 252, at least a portion of the second hinge plate 253, and/or the hinge bracket 255. In the unfolded state of the electronic device 200, the hinge cover 251 may be covered by the first housing 210 and the second housing 220. In the folded state of the electronic device 200, the hinge cover 251 may be exposed to the outside of the first housing 210 and the second housing 220.

According to an embodiment, the first hinge plate 252 may be movable with respect to the hinge bracket 255. The first hinge plate 252 may fold or unfold the display 230. For example, when the first housing 210 rotates, the first hinge plate 252 may fold or unfold the display 230 by rotating with respect to the hinge bracket 255. A surface 252a of the first hinge plate 252 may face the display 230. In the unfolded state of the electronic device 200, a direction in which the surface 252a of the first hinge plate 252 faces may be substantially the same as the direction in which the first surface 211 of the first housing 210 faces. In the folded state of the electronic device 200, the direction in which the surface 252a of the first hinge plate 252 faces may be inclined with respect to the direction in which the first surface 211 of the first housing 210 faces. According to an embodiment, a rotation angle range of the first hinge plate 252 rotatable with respect to the hinge bracket 255 may be greater than a rotation angle range of the first housing 210 rotatable with respect to the second housing 220. For example, when the state of the electronic device 200 changes from the unfolded state to the folded state, the rotation angle of the first hinge plate 252 rotatable with respect to the hinge bracket 255 may be 100 degrees, and the rotation angle of the first housing 210 rotatable with respect to the second housing 220 may be 90 degrees, but is not limited thereto.

According to an embodiment, the second hinge plate 253 may be movable with respect to the hinge bracket 255. The second hinge plate 253 may fold or unfold the display 230. For example, when the second housing 220 rotates, the second hinge plate 253 may fold or unfold the display 230 by rotating with respect to the hinge bracket 255. A surface 253a of the second hinge plate 253 may face the display 230. In the unfolded state of the electronic device 200, a direction in which the surface 253a of the second hinge plate 253 faces may be substantially the same as the direction in which the third surface 221 of the second housing 220 faces. In the folded state of the electronic device 200, the direction in which the surface 253a of the second hinge plate 253 faces may be inclined with respect to the direction in which the third surface 221 of the second housing 220 faces. According to an embodiment, a rotation angle range of the second hinge plate 253 rotatable with respect to the hinge bracket 255 may be greater than a rotation angle range of the second housing 220 rotatable with respect to the first housing 210. For example, when the state of the electronic device 200 changes from the unfolded state to the folded state, the rotation angle of the second hinge plate 253 rotatable with respect to the hinge bracket 255 may be 100 degrees, and the rotation angle of the second housing 220 rotatable with respect to the first housing 210 may be 90 degrees, but is not limited thereto.

According to an embodiment, the hinge bracket 255 may be coupled to the first hinge plate 252 and the second hinge plate 253. The hinge bracket 255 may support the first hinge plate 252 and the second hinge plate 253. For example, by the hinge bracket 255, the first hinge plate 252 and the second hinge plate 253 may be rotatable with respect to the hinge bracket 255, independently of each other. The hinge bracket 255 may provide a rotation axis of each of the first hinge plate 252 and the second hinge plate 253. For example, the hinge bracket 255 may include grooves accommodating each of the first hinge plate 252 and the second hinge plate 253. In case that the hinge bracket 255 includes the grooves, each of the first hinge plate 252 and the second hinge plate 253 may be rotatable along each of the grooves of the hinge bracket 255. The hinge bracket 255 may be disposed in the hinge cover 251. For example, the hinge bracket 255 may be accommodated in the hinge cover 251.

According to an embodiment, in the folded state of the electronic device 200, the second hinge plate 253 may be inclined with respect to the first hinge plate 252. For example, in the folded state of the electronic device 200, the surface 253a of the second hinge plate 253 may be inclined with respect to the surface 252a of the first hinge plate 252. For example, in the folded state of the electronic device 200, the direction in which the surface 253a of the second hinge plate 253 faces may be inclined with respect to the direction in which the surface 252a of the first hinge plate 252 faces. Since the rotation angle ranges of the first hinge plate 252 and the second hinge plate 253 with respect to the hinge bracket 255 are different from the rotation angle ranges of the first housing 210 and the second housing 220, the electronic device 200 according to an embodiment may provide a structure in which a change in curvature of a portion of the display 230 positioned between the first hinge plate 252 and the second hinge plate 253 is gentle. For example, in case that the first hinge plate 252 and the second hinge plate 253 face each other in the folded state of the electronic device 200, the curvature of the portion of the display 230 positioned between the first hinge plate 252 and the second hinge plate 253 may change rapidly between the first hinge plate 252 and the second hinge plate 253. Since the first hinge plate 252 and the second hinge plate 253 are inclined with respect to each other in the folded state of the electronic device 200, the electronic device 200 according to an embodiment may provide the structure in which the change in curvature of the portion of the display 230 positioned between the first hinge plate 252 and the second hinge plate 253 is gentle. Since the change in curvature of the portion of the display 230 positioned between the first hinge plate 252 and the second hinge plate 253 is gentle, the electronic device 200 according to an embodiment may provide a structure that reduces wrinkles of the display 230 generated by repetition of folding or unfolding.

According to an embodiment, the electromagnetic induction panel 300 may be configured to receive an input from an electronic pen p. The electromagnetic induction panel 300 may be configured to receive a hovering input or a touch input on the display 230. According to an embodiment, the electromagnetic induction panel 300 may be referred to as an electromagnetic resonance (EMR) panel, an electromagnetic panel, and/or a digitizer. According to an embodiment, the electronic pen p may be referred to as a stylus pen. For example, the electronic pen p may have substantially the same shape as a shape of a pen. According to an embodiment, the electronic pen p may be detachably coupled inside the electronic device 200. For example, the electronic device 200 may include an accommodation space for accommodating the electronic pen p, and the electronic pen p may be inserted into the accommodation space. However, it is not limited thereto, and the electronic pen p may not be accommodated in the electronic device 200. For example, the electronic pen p may be attached to an outer surface of the electronic device 200.

According to an embodiment, the electromagnetic induction panel 300 may be configured to transmit an electromagnetic signal to the electronic pen p or to receive an electromagnetic signal from the electronic pen p. For example, the electromagnetic induction panel 300 may include at least one first conductive pattern 310 and at least one second conductive pattern 320. The at least one first conductive pattern 310 may transmit an electromagnetic signal to the electronic pen p or receive an electromagnetic signal from the electronic pen p. The at least one first conductive pattern 310 may be disposed in the electromagnetic induction panel 300. The at least one first conductive pattern 310 may be disposed on at least a portion of the first housing 210, the second housing 220, and the hinge structure 250. For example, the at least one first conductive pattern 310 may not be disposed on a portion of the hinge structure 250 adjacent to the folding axis f. For example, the at least one first conductive pattern 310 may extend along a direction substantially parallel to the folding axis f. For example, the at least one first conductive pattern 310 may include a plurality of first conductive patterns that are substantially parallel to the folding axis f and are spaced apart from each other. The at least one second conductive pattern 320 may transmit an electromagnetic signal to the electronic pen p or receive an electromagnetic signal from the electronic pen p. The at least one second conductive pattern 320 may be disposed in the electromagnetic induction panel 300. The at least one second conductive pattern 320 may cross the at least one first conductive pattern 310. For example, the at least one second conductive pattern 320 may extend along a direction substantially perpendicular to the folding axis f. The at least one second conductive pattern 320 may be disposed on the at least a portion of the first housing 210, the second housing 220, and the hinge structure 250. For example, the at least one second conductive pattern 320 may not be disposed on the portion of the hinge structure 250 adjacent to the folding axis f. For example, the at least one second conductive pattern 320 may include a plurality of second conductive patterns that are substantially perpendicular to the folding axis f and are spaced apart from each other.

According to an embodiment, a processor (e.g., the processor 120 of FIG. 1) may transmit a first electromagnetic signal to the electronic pen p through at least one of the at least one first conductive pattern 310 and the at least one second conductive pattern 320. The first electromagnetic signal received by the electronic pen p may cause electromagnetic resonance in the electronic pen p. For example, the first electromagnetic signal may cause electromagnetic induction in a coil (not illustrated) included in the electronic pen p. A second electromagnetic signal generated by the electromagnetic resonance in the electronic pen p may be transmitted to the electromagnetic induction panel 300. By an electromagnetically induced current in the electronic pen p, the electronic pen p may generate the second electromagnetic signal without a separate power supply. Based on the electromagnetically induced current in the coil, the electronic pen p may generate the second electromagnetic signal and transmit the generated second electromagnetic signal to the electromagnetic induction panel 300. The second electromagnetic signal received by the at least one of the at least one first conductive pattern 310 and the at least one second conductive pattern 320 may cause electromagnetic resonance in the at least one of the at least one first conductive pattern 310 and the at least one second conductive pattern 320. The processor 120 may identify an input from the electronic pen p based on a third electromagnetic signal generated by electromagnetic resonance in the electromagnetic induction panel 300.

According to an embodiment, the processor 120 may identify a type of an input from the electronic pen p based on identifying a phase of the third electromagnetic signal. For example, the processor 120 may identify an input from the electronic pen p as a touch input based on identifying that the phase of the third electromagnetic signal is less than or equal to a first threshold value. For example, the processor 120 may identify an input from the electronic pen p as a hovering input based on identifying that the phase of the third electromagnetic signal is greater than the first threshold value. According to an embodiment, the processor 120 may identify data on a position of the electronic pen p based on an intensity of the third electromagnetic signal. For example, the data on the position of the electronic pen p may include coordinates on the display 230 corresponding to the position of the electronic pen p above the display 230.

According to an embodiment, the electromagnetic induction panel 300 may be disposed above the first housing 210 and the second housing 220 across the hinge structure 250. The electromagnetic induction panel 300 may be disposed below the display 230. For example, the electromagnetic induction panel 300 may be disposed above the first surface 211 of the first housing 210 and the third surface 221 of the second housing 220 across the hinge structure 250. According to an embodiment, the electromagnetic induction panel 300 may include a first folding region 301, a first planar region 302, a second folding region 303, and/or a second planar region 304.

According to an embodiment, the first folding region 301 may be deformable by the hinge structure 250. For example, the first folding region 301 may be deformable by the first hinge plate 252. The first folding region 301 may be disposed between the display 230 and the hinge structure 250. The first folding region 301 may be disposed between the display 230 and the first hinge plate 252. At least a portion of the first folding region 301 may be disposed above the surface 252a of the first hinge plate 252. The at least a portion of the first folding region 301 may be disposed on one surface 252a of the first hinge plate 252. For example, in the unfolded state of the electronic device 200, the first folding region 301 may have a shape substantially parallel to the surface 252a of the first hinge plate 252. In the unfolded state of the electronic device 200, the first folding region 301 may be substantially parallel to the first planar region 302. As the state of the electronic device 200 changes from the unfolded state to the folded state, the first folding region 301 may be deformed by the first hinge plate 252. For example, as the state of the electronic device 200 changes from the unfolded state to the folded state, the first folding region 301 may be bent by the first hinge plate 252. In the folded state of the electronic device 200, the first folding region 301 may have a slope with respect to the first planar region 302.

According to an embodiment, the first planar region 302 may be disposed above the first housing 210. The first planar region 302 may be disposed between the display 230 and the first surface 211. The first planar region 302 may be disposed above the first surface 211 of the first housing 210. The first planar region 302 may be connected to the first folding region 301. According to an embodiment, the first planar region 302 may have a shape that is maintained independently of a change in the state of the electronic device 200. For example, in the unfolded state and the folded state of the electronic device 200, the first planar region 302 may have a shape substantially parallel to the first surface 211 of the first housing 210. According to an embodiment, a thickness of the first planar region 302 may be thicker than a thickness of the first folding region 301. A thickness of a component may mean a distance in a direction parallel to a direction (e.g., the +z direction) in which the first surface 211 faces in the unfolded state of the electronic device 200, and the corresponding expression may be used substantially the same below unless otherwise stated. The thickness of the first folding region 301 may be thinner than the thickness of the first planar region 302. For example, the number of layers included in the first folding region 301 may be smaller than the number of layers included in the first planar region 302. For example, a sum of thicknesses of each layer included in the first folding region 301 may be smaller than a sum of thicknesses of each layer included in the first planar region 302. For example, as a shape of the first folding region 301 changes when the state of the electronic device 200 changes, the first folding region 301 may be vulnerable to damage due to stress. Since the first folding region 301 is thinner than the first planar region 302, the electronic device 200 according to an embodiment may provide a structure capable of reducing the damage to the first folding region 301 due to the stress. For example, since rigidity decreases as a thickness decreases, the damage due to the stress in the first folding region 301 with a relatively thin thickness may be reduced.

According to an embodiment, the second folding region 303 may be deformable by the hinge structure 250. For example, the second folding region 303 may be deformable by the second hinge plate 253. The second folding region 303 may be disposed between the display 230 and the hinge structure 250. The second folding region 303 may be disposed between the display 230 and the second hinge plate 253. At least a portion of the second folding region 303 may be disposed above the surface 253a of the second hinge plate 253. The at least a portion of the second folding region 303 may be disposed on the surface 253a of the second hinge plate 253. For example, in the unfolded state of the electronic device 200, the second folding region 303 may have a shape substantially parallel to the surface 253a of the second hinge plate 253. In the unfolded state of the electronic device 200, the second folding region 303 may be substantially parallel to the second planar region 304. As the state of the electronic device 200 changes from the unfolded state to the folded state, the second folding region 303 may be deformed by the second hinge plate 253. For example, as the state of the electronic device 200 changes from the unfolded state to the folded state, the second folding region 303 may be bent by the second hinge plate 253. In the folded state of the electronic device 200, the second folding region 303 may have a slope with respect to the second planar region 304. According to an embodiment, the second folding region 303 may be separated from the first folding region 301. The second folding region 303 may be spaced apart from the first folding region 301. As the first folding region 301 and the second folding region 303 are disconnected from each other, damage to the electromagnetic induction panel 300 due to the stress generated by the change in the state of the electronic device 200 may be reduced.

According to an embodiment, the second planar region 304 may be disposed above the second housing 220. The second planar region 304 may be disposed between the display 230 and the third surface 221. The second planar region 304 may be disposed above the third surface 221 of the second housing 220. The second planar region 304 may be connected to the second folding region 303. According to an embodiment, the second planar region 304 may have a shape that is maintained independently of a change in the state of the electronic device 200. For example, in the unfolded state and the folded state of the electronic device 200, the second planar region 304 may have a shape substantially parallel to the third surface 221 of the second housing 220. According to an embodiment, a thickness of the second planar region 304 may be thicker than a thickness of the second folding region 303. The thickness of the second folding region 303 may be thinner than the thickness of the second planar region 304. For example, the number of layers included in the second folding region 303 may be smaller than the number of layers included in the second planar region 304. For example, a sum of thicknesses of each layer included in the second folding region 303 may be smaller than a sum of thicknesses of each layer included in the second planar region 304. For example, as a shape of the second folding region 303 changes when the state of the electronic device 200 changes, the second folding region 303 may be vulnerable to damage due to stress. Since the second folding region 303 is thinner than the second planar region 304, the electronic device 200 according to an embodiment may provide a structure capable of reducing the damage to the second folding region 303 due to the stress. For example, since rigidity decreases as a thickness decreases, the damage due to the stress in the second folding region 303 with a relatively thin thickness may be reduced.

According to an embodiment, the electromagnetic induction panel 300 may include an insulating layer 330, at least one first layer 340, and/or at least one second layer 350.

According to an embodiment, the insulating layer 330 may be disposed above the first housing 210 and a portion of the hinge structure 250. The insulating layer 330 may be disposed above the second housing 220 and the portion of the hinge structure 250. For example, the insulating layer 330 may be disposed in the first folding region 301 and the first planar region 302. For example, the insulating layer 330 may extend in the first folding region 301 and the first planar region 302. For example, the insulating layer 330 may be disposed in the second folding region 303 and the second planar region 304. For example, the insulating layer 330 may extend in the second folding region 303 and the second planar region 304. For example, the insulating layer 330 may be disconnected above the portion of the hinge structure 250 adjacent to the folding axis f. According to an embodiment, the insulating layer 330 may have flexibility. For example, the insulating layer 330 may include polyimide (PI), but is not limited thereto. For example, a thickness of the insulating layer 330 may be approximately 9 µm, but is not limited thereto.

According to an embodiment, the at least one first layer 340 may be disposed above the insulating layer 330. The at least one first layer 340 may include the at least one first conductive pattern 310. For example, the at least one first layer 340 may include a first conductive layer 341 disposed on a surface 330a of the insulating layer 330. The surface 330a of the insulating layer 330 may face the display 230. The first conductive layer 341 may include the at least one first conductive pattern 310. The first conductive layer 341 may define (or form) the at least one first conductive pattern 310. According to an embodiment, the first conductive layer 341 may be disposed in the first folding region 301, the first planar region 302, the second folding region 303, and the second planar region 304. In the first planar region 302 and/or the second planar region 304, a thickness of the first conductive layer 341 may be substantially constant. For example, in the first planar region 302 and/or the second planar region 304, the thickness of the first conductive layer 341 may be approximately 14 µm, but is not limited thereto. In the first folding region 301 and/or the second folding region 303, the thickness of the first conductive layer 341 may be non-uniform. For example, in the first folding region 301 and/or the second folding region 303, a thickness of a portion of the first conductive layer 341 adjacent to the via holes may be thicker than a thickness of another portion of the first conductive layer 341. For example, the thickness of the portion of the first conductive layer 341 adjacent to the via holes may be approximately 14 µm, and the thickness of the other portion of the first conductive layer 341 may be approximately 6 µm, but are not limited thereto. According to an embodiment, the at least one first layer 340 may include a plurality of layers disposed on the first conductive layer 341. For example, the at least one first layer 340 may include a first cover layer 342 and/or a first adhesive layer 343.

According to an embodiment, the first cover layer 342 may protect layers in the electromagnetic induction panel 300. The first cover layer 342 may be disposed on the first conductive layer 341. The first cover layer 342 may be disposed above the first conductive layer 341. For example, the first cover layer 342 may be spaced apart from the first conductive layer 341 along a direction (e.g., the +z direction) in which the surface 330a of the insulating layer 330 faces. For example, a thickness of the first cover layer 342 may be approximately 7.5 µm, but is not limited thereto. According to an embodiment, the first cover layer 342 may be disposed in the first folding region 301, the first planar region 302, the second folding region 303, and the second planar region 304. For example, the first cover layer 342 may extend while defining substantially one plane in the first folding region 301, the first planar region 302, the second folding region 303, and the second planar region 304.

According to an embodiment, the first adhesive layer 343 may attach the first cover layer 342 to the first conductive layer 341. For example, the first adhesive layer 343 may include an adhesive material. The first adhesive layer 343 may be interposed between the first cover layer 342 and the first conductive layer 341. For example, the first adhesive layer 343 may contact the first conductive layer 341 and the first cover layer 342. According to an embodiment, the first adhesive layer 343 may be disposed in the first folding region 301, the first planar region 302, the second folding region 303, and the second planar region 304. For example, the first adhesive layer 343 may extend while defining one plane in the first folding region 301, the first planar region 302, the second folding region 303, and the second planar region 304. For example, a thickness of the first adhesive layer 343 may be approximately 12 µm, but is not limited thereto.

According to an embodiment, the at least one second layer 350 may be disposed below the insulating layer 330. The at least one second layer 350 may include the at least one second conductive pattern 320. For example, the at least one second layer 350 may include a second conductive layer 351 disposed on another surface 330b of the insulating layer 330 opposite to the surface 330a of the insulating layer 330. A direction in which the other surface 330a of the insulating layer 330 faces may be opposite to a direction in which the surface 330a of the insulating layer 330 faces. The second conductive layer 351 may include the at least one second conductive pattern 320. The second conductive layer 351 may define (or form) the at least one second conductive pattern 320. According to an embodiment, the second conductive layer 351 may be disposed in the first folding region 301, the first planar region 302, the second folding region 303, and the second planar region 304. In the first planar region 302 and/or the second planar region 304, a thickness of the second conductive layer 351 may be substantially constant. For example, in the first planar region 302 and/or the second planar region 304, the thickness of the second conductive layer 351 may be approximately 14 µm, but is not limited thereto. In the first folding region 301 and/or the second folding region 303, the thickness of the second conductive layer 351 may be non-uniform. For example, in the first folding region 301 and/or the second folding region 303, a thickness of a portion of the second conductive layer 351 adjacent to the via holes may be thicker than a thickness of another portion of the second conductive layer 351. For example, the thickness of the portion of the second conductive layer 351 adjacent to the via holes may be approximately 14 µm, and the thickness of the other portion of the second conductive layer 351 may be approximately 6 µm, but are not limited thereto. According to an embodiment, the at least one second layer 350 may include a second cover layer 352, a first shielding layer 353, a reinforcing layer 354, and a plurality of adhesive layers 355.

According to an embodiment, the second cover layer 352 may protect the layers in the electromagnetic induction panel 300. The second cover layer 352 may be disposed on the second conductive layer 351. The second cover layer 352 may be disposed over the second conductive layer 351. For example, the second cover layer 352 may be spaced apart from the second conductive layer 351 along a direction (e.g., a -z direction) in which the other surface 330b of the insulating layer 330 faces. For example, a thickness of the second cover layer 352 may be approximately 7.5 µm, but is not limited thereto. According to an embodiment, the second cover layer 352 may be disposed in the first folding region 301, the first planar region 302, the second folding region 303, and the second planar region 304. The second cover layer 352 may be disconnected in the first folding region 301, the first planar region 302, the second folding region 303, and the second planar region 304. For example, a first portion 352a of the second cover layer 352 disposed in the first folding region 301 may be disconnected from a second portion 352b of the second cover layer 352 disposed in the first planar region 302. For example, a third portion 352c of the second cover layer 352 disposed in the second folding region 303 may be disconnected from a fourth portion 352d of the second cover layer 352 disposed in the second planar region 304. For example, a distance between the second conductive layer 351 and the first portion 352a of the second cover layer 352 disposed in the first folding region 301 may be greater than a distance between the second conductive layer 351 and the second portion 352b of the second cover layer 352 disposed in the first planar region 302. For example, a distance between the second conductive layer 351 and the third portion 352c of the second cover layer 352 disposed in the second folding region 303 may be greater than a distance between the second conductive layer 351 and the fourth portion 352d of the second cover layer 352 disposed in the second planar region 304.

According to an embodiment, the first shielding layer 353 may shield an electromagnetic wave from the electromagnetic induction panel 300. The first shielding layer 353 may shield an electromagnetic wave generated from the first conductive pattern 310 and/or the second conductive pattern 320. For example, the first shielding layer 353 may include magnetic metal powder (MMP). The metal powder may include, for example, at least one selected from among iron, aluminum, nickel, silicon, or a combination thereof. According to an embodiment, the first shielding layer 353 may be disposed in the first planar region 302 and the second planar region 304. The first shielding layer 353 may be disposed outside the first folding region 301 and the second folding region 303. The first shielding layer 353 may be disposed above the first surface 211 of the first housing 210 and the third surface 221 of the second housing 220. For example, the first shielding layer 353 may be disposed on the second portion 352b of the second cover layer 352 disposed in the first planar region 302. For example, the first shielding layer 353 may be disposed on the fourth portion 352d of the second cover layer 352 disposed in the second planar region 304. For example, a thickness of the first shielding layer 353 may be approximately 45 µm, but is not limited thereto.

According to an embodiment, the reinforcing layer 354 may reinforce rigidity of the first folding region 301 and the second folding region 303. For example, the reinforcing layer 354 may include, for example, a stainless used steel (SUS), but is not limited thereto. The reinforcing layer 354 may be disposed in the first folding region 301 and the second folding region 303. The reinforcing layer 354 may be disposed outside the first planar region 302 and the second planar region 304. For example, the reinforcing layer 354 may be disposed on a portion of the second conductive layer 351 disposed in the first folding region 301. For example, the reinforcing layer 354 may be disposed on a portion of the second conductive layer 351 disposed in the second folding region 303. According to an embodiment, the reinforcing layer 354 may be interposed between the second conductive layer 351 and the second cover layer 352. For example, the reinforcing layer 354 may be separated from the second conductive layer 351 and the second cover layer 352 between the second conductive layer 351 and the second cover layer 352. For example, a thickness of the reinforcing layer 354 may be approximately 7.5 µm, but is not limited thereto.

According to an embodiment, the plurality of adhesive layers 355 may include a second adhesive layer 355a, a third adhesive layer 355b, a fourth adhesive layer 355c, and/or a fifth adhesive layer 355d.

According to an embodiment, in the first planar region 302 and the second planar region 304, the second adhesive layer 355a may attach the second cover layer 352 to the second conductive layer 351. In the first planar region 302 and the second planar region 304, the second adhesive layer 355a may be interposed between the second cover layer 352 and the second conductive layer 351. For example, the second adhesive layer 355a may be interposed between the second portion 352b of the second cover layer 352 and the second conductive layer 351. For example, the second adhesive layer 355a may be interposed between the fourth portion 352d of the second cover layer 352 and the second conductive layer 351. For example, a thickness of the second adhesive layer 355a may be approximately 12 µm, but is not limited thereto.

According to an embodiment, in the first planar region 302 and the second planar region 304, the third adhesive layer 355b may attach the first shielding layer 353 on the second cover layer 352. In the first planar region 302 and the second planar region 304, the third adhesive layer 355b may be interposed between the first shielding layer 353 and the second cover layer 352. For example, the third adhesive layer 355b may be interposed between the first shielding layer 353 and the second portion 352b of the second cover layer 352. For example, the third adhesive layer 355b may be interposed between the first shielding layer 353 and the second portion 352b of the second cover layer 352. For example, the third adhesive layer 355b may include a pressure sensitive adhesive (PSA), but is not limited thereto. For example, a thickness of the third adhesive layer 355b may be approximately 7 µm, but is not limited thereto.

According to an embodiment, in the first folding region 301 and the second folding region 303, the fourth adhesive layer 355c may attach the reinforcing layer 354 to the second conductive layer 351. In the first folding region 301 and the second folding region 303, the fourth adhesive layer 355c may be interposed between the reinforcing layer 354 and the second conductive layer 351. For example, a thickness of the fourth adhesive layer 355c may be approximately 5 µm, but is not limited thereto.

According to an embodiment, in the first folding region 301 and the second folding region 303, the fifth adhesive layer 355d may attach the second cover layer 352 to the reinforcing layer 354. In the first folding region 301 and the second folding region 303, the fifth adhesive layer 355d may be interposed between the second cover layer 352 and the reinforcing layer 354. For example, the fifth adhesive layer 355d may be interposed between the first portion 352a of the second cover layer 352 and the reinforcing layer 354. For example, the fifth adhesive layer 355d may be interposed between the third portion 352c of the second cover layer 352 and the reinforcing layer 354. For example, a thickness of the fifth adhesive layer 355d may be 5 µm, but is not limited thereto.

According to an embodiment, the first folding region 301 may have an asymmetrical shape with respect to the insulating layer 330. In the first folding region 301, the at least one first layer 340 and the at least one second layer 350 may be asymmetrical to each other. According to an embodiment, the second folding region 303 may have an asymmetrical shape with respect to the insulating layer 330. In the second folding region 303, the at least one first layer 340 and the at least one second layer 350 may be asymmetrical to each other. According to an embodiment, a neutral surface n1 of the first folding region 301 and the second folding region 303 may be disposed below the insulating layer 330. The neutral surface n1 may mean a boundary between a portion where compressive stress is applied and a portion where tensile stress is applied when stress is applied to the inside of the first folding region 301 and the second folding region 303. The neutral surface n1 may mean a portion in which the stress is not applied in a state in which the stress is applied to the inside of the first folding region 301 and the second folding region 303. The neutral surface n1 may be defined based on a characteristic (e.g., Young's modulus) and a thickness of each of the first folding region 301 and the second folding region 303. Magnitude of the stress applied in the first folding region 301 and the second folding region 303 may be defined based on a distance spaced apart from the neutral surface n1. For example, the magnitude of the stress applied in the first folding region 301 and the second folding region 303 may increase according to the distance from the neutral surface n1. According to an embodiment, the neutral surface n1 of the first folding region 301 and the second folding region 303 may be defined in the second conductive layer 351. For example, the number of the at least one second layer 350 in the first folding region 301 may be greater than the number of the at least one first layer 340 in the first folding region 301. For example, a thickness of the at least one second layer 350 in the first folding region 301 may be thicker than a thickness of the at least one second layer 350 in the first folding region 301. For example, the at least one second layer 350 may be thicker than the at least one first layer 340 by the reinforcing layer 354 disposed between the second conductive layer 351 and the second cover layer 352 in the first folding region 301. For example, the number of the at least one second layer 350 in the second folding region 303 may be greater than the number of the at least one first layer 340 in the second folding region 303. For example, the thickness of the at least one second layer 350 in the second folding region 303 may be thicker than the thickness of the at least one second layer 350 in the second folding region 303. For example, the at least one second layer 350 may be thicker than the at least one first layer 340 by the reinforcing layer 354 disposed between the second conductive layer 351 and the second cover layer 352 in the second folding region 303. With respect to the neutral surface n1, the compressive stress may be applied to layers disposed above the neutral surface n1, and the tensile stress may be generated to layers disposed below the neutral surface n1. In case that the neutral surface n1 is defined in the insulating layer 330, since the conductive layers 341 and 351 including the conductive patterns 310 and 320 are relatively vulnerable to the tensile stress, the second conductive layer 351 disposed below the neutral surface n1 may be damaged due to the tensile stress. The electronic device 200 according to an embodiment may provide a structure capable of reducing damage to the electromagnetic induction panel 300 by the at least one second layer 350 thicker than the at least one first layer 340 such that the neutral surface n1 is defined below the insulating layer 330.

According to an embodiment, the plurality of shielding members 410 may shield an electromagnetic wave from the electromagnetic induction panel 300. The plurality of shielding members 410 may shield an electromagnetic wave generated from the first conductive pattern 310 and/or the second conductive pattern 320. For example, the plurality of shielding members 410 may include the magnetic metal powder (MMP). The metal powder may include, for example, at least one selected from among the iron, the aluminum, the nickel, the silicon, or a combination thereof. A thickness of each of the plurality of shielding members 410 may be, for example, 40 µm, but is not limited thereto. According to an embodiment, the plurality of shielding members 410 may be separated from the shielding layer 353 in the at least one second layer 350. For example, the plurality of shielding members 410 may be separated from the shielding layer 353 disposed in the first planar region 302. For example, the plurality of shielding members 410 may be separated from the shielding layer 353 disposed in the second planar region 304. According to an embodiment, the plurality of shielding members 410 may be spaced apart from the at least one second layer 350 in the electromagnetic induction panel 300. For example, the plurality of shielding members 410 may face the at least one second layer 350 disposed in the first folding region 301 and may be spaced apart from the at least one second layer 350. For example, the plurality of shielding members 410 may face the at least one second layer 350 disposed in the second folding region 303 and may be spaced apart from the at least one second layer 350. For example, in case that the plurality of shielding members 410 are disposed in the at least one second layer 350 in the first folding region 301 and the second folding region 303, the thicknesses of the first folding region 301 and the second folding region 303 may become relatively thick due to the thickness of the plurality of shielding members 410. In case that the thicknesses of the first folding region 301 and the second folding region 303 are relatively thick, damage due to stress in the first folding region 301 and the second folding region 303 may increase. For example, in case that the plurality of shielding members 410 are disposed below the second conductive layer 351 disposed in the first folding region 301 and the second folding region 303, a distance between the neutral surface n1 and the first conductive layer 341 may increase since the thickness of at least one second layer 350 increases excessively. In case that the distance between the neutral surface n1 and the first conductive layer 341 increases, damage to the first conductive layer 341 may occur due to an increase in magnitude of stress applied to the first conductive layer 341. The electronic device 200 according to an embodiment may provide a structure capable of reducing damage to the electromagnetic induction panel 300 while shielding the electromagnetic wave from the electromagnetic induction panel 300 by the plurality of shielding members 410 disposed outside the electromagnetic induction panel 300.

According to an embodiment, the plurality of shielding members 410 may be disposed on the hinge structure 250. The plurality of shielding members 410 may be attached to the hinge structure 250. For example, the plurality of shielding members 410 may include a first shielding member 411 disposed on the first hinge plate 252 and a second shielding member 412 disposed on the second hinge plate 253. The first shielding member 411 may be disposed on the surface 252a of the first hinge plate 252. The first shielding member 411 may be separated from the first shielding layer 353. The second shielding member 412 may be disposed on the surface 253a of the second hinge plate 253. The second shielding member 412 may be separated from the first shielding layer 353. The second shielding member 412 may be separated from the first shielding member 411. The second shielding member 412 may be spaced apart from the first shielding member 411.

According to an embodiment, the guide member 420 may support the first folding region 301 and the second folding region 303. When the state of the electronic device 200 changes, the guide member 420 may guide a shape change of the first folding region 301 and the second folding region 303. For example, when the state of the electronic device 200 changes from the unfolded state to the folded state, the guide member 420 may guide the shape change of the first folding region 301 so that the first folding region 301 is bent against the first planar region 302. For example, when the state of the electronic device 200 changes from the unfolded state to the folded state, the guide member 420 may guide the shape change of the second folding region 303 so that the second folding region 303 is bent against the second planar region 304. According to an embodiment, the guide member 420 may be disposed between the first folding region 301 and the second folding region 303. The guide member 420 may be disposed above the hinge structure 250. The guide member 420 may be attached on the hinge structure 250. For example, the guide member 420 may be attached on the second hinge plate 253, but is not limited thereto. For example, the guide member 420 may be attached on the first hinge plate 252. For example, the guide member 420 may be attached to one of the first folding region 301 and the second folding region 303.

According to an embodiment, when the state of the electronic device 200 changes, the adhesive member 430 may fix a portion of the guide member 420 in the electronic device 200 so that a shape change of the guide member 420 corresponds to the shape change of the first folding region 301 and the second folding region 303. The adhesive member 430 may be disposed above the hinge structure 250. For example, the adhesive member 430 may be disposed between the second hinge plate 253 and the guide member 420, but is not limited thereto. For example, the adhesive member 430 may be disposed between the first hinge plate 252 and the guide member 420. For example, the adhesive member 430 may be disposed between one of the first folding region 301 and the second folding region 303, and the guide member 420.

According to an embodiment, the plurality of supporting members 440 may support the electromagnetic induction panel 300 and the display 230. The plurality of supporting members 440 may include a first supporting member 441 and a second supporting member 442. The first supporting member 441 may be interposed between the first surface 211 of the first housing 210 and the first planar region 302 of the electromagnetic induction panel 300. The second supporting member 442 may be interposed between the third surface 221 of the second housing 220 and the second planar region 304.

As described above, the electronic device 200 according to an embodiment may provide the structure capable of reducing damage to the electromagnetic induction panel 300 due to the stress generated while the state of the electronic device 200 is changed by the first folding region 301 thinner than the first planar region 302. The electronic device 200 according to an embodiment may provide the structure capable of reducing damage to the electromagnetic induction panel 300 by the at least one second layer 350 having a thickness thicker than the at least one first layer 340 so that the neutral surface n1 is formed below the insulating layer 330.

Meanwhile, in FIG. 3D, it is illustrated that the reinforcing layer 354 and the fourth adhesive layer 355c are disposed between the second conductive layer 351 and the second cover layer 352 in the first folding region 301 and the second folding region 303, but positions of the reinforcing layer 354 and the fourth adhesive layer 355c are not limited thereto. For example, the reinforcing layer 354 and the fourth adhesive layer 355c may be disposed below the second cover layer 352. In case that the reinforcing layer 354 and the fourth adhesive layer 355c are disposed below the second cover layer 352, the fourth adhesive layer 355c may be disposed on the second cover layer 352, and the reinforcing layer 354 may be disposed on the fourth adhesive layer 355c disposed on the second cover layer 352. In case that the reinforcing layer 354 and the fourth adhesive layer 355c are disposed below the second cover layer 352, the fifth adhesive layer 355d may be disposed on the second conductive layer 351, and the second cover layer 352 may be disposed on the fifth adhesive layer 355d disposed on the second conductive layer 351.

Meanwhile, in FIG. 3C, it is illustrated that the electronic device 200 includes an in-folding structure in which the first surface 211 and the third surface 221 face each other in the folded state of the electronic device 200, but is not limited thereto. For example, the electronic device 200 may include an out-folding structure in which the second surface 212 and the fourth surface 222 face each other in the folded state of the electronic device 200. In case that the electronic device 200 includes the out-folding structure, the guide member 420 may be omitted.

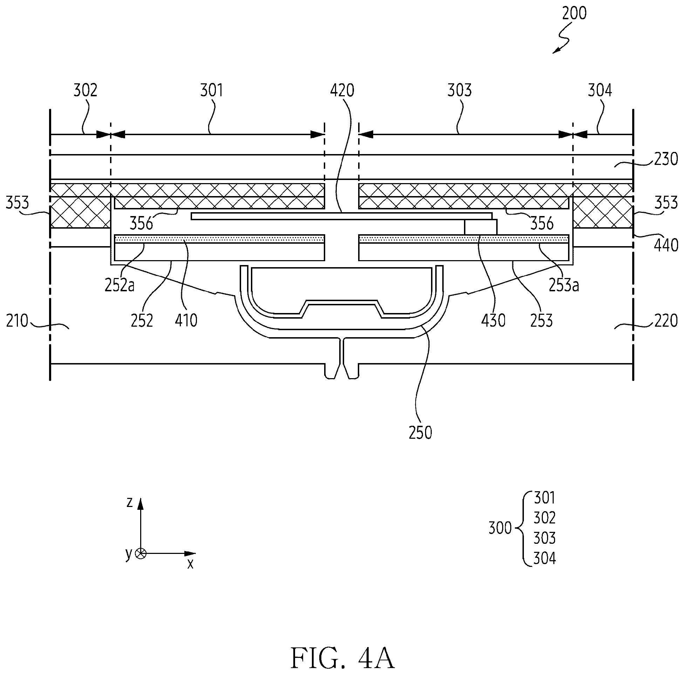

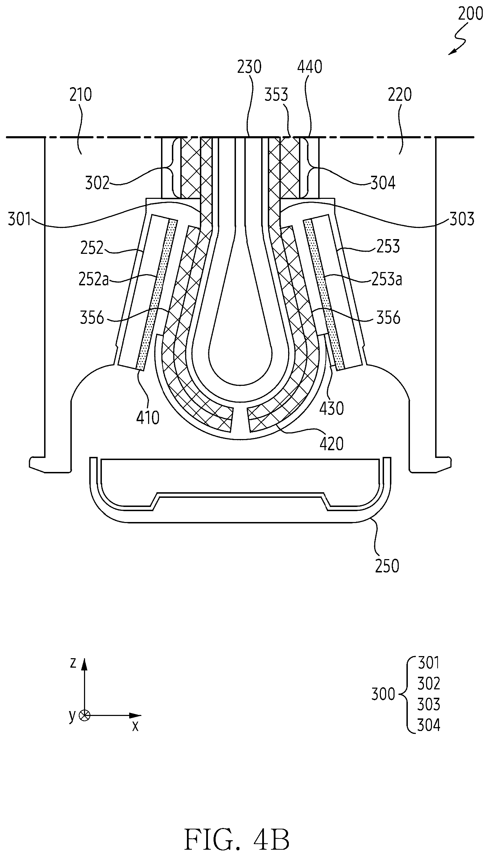

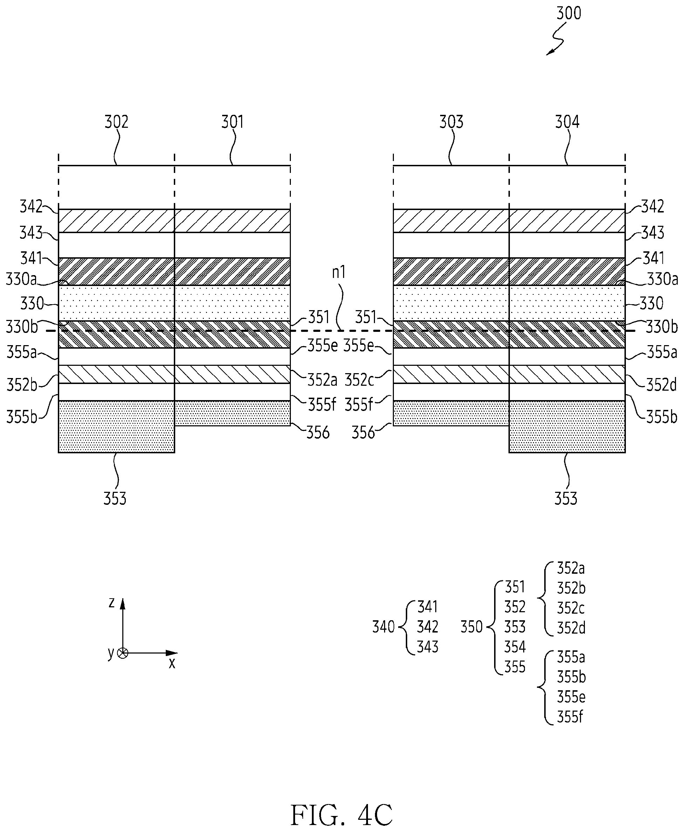

FIG. 4A is a cross-sectional view illustrating an example of cutting an exemplary electronic device in an unfolded state, according to an embodiment, FIG. 4B is a cross-sectional view illustrating an example of cutting an exemplary electronic device in a folded state, according to an embodiment, and FIG. 4C is a cross-sectional view illustrating an example of cutting an exemplary electromagnetic induction panel, according to an embodiment.

Referring to FIGS. 4A, 4B, and 4C, an electronic device 200 according to an embodiment may include a first housing 210, a second housing 220, a display 230, a hinge structure 250, an electromagnetic induction panel 300, a plurality of shielding members 410, a guide member 420, an adhesive member 430, and/or a plurality of supporting members 440. Since each of the first housing 210, the second housing 220, the display 230, the hinge structure 250, the electromagnetic induction panel 300, the plurality of shielding members 410, the guide member 420, the adhesive member 430, and/or the plurality of supporting members 440 of FIG. 4A, 4B, and 4C may be substantially the same as each of the first housing 210, the second housing 220, the display 230, the hinge structure 250, the electromagnetic induction panel 300, the plurality of shielding members 410, the guide member 420, the adhesive member 430, and/or the plurality of supporting members 440 of FIGS. 3A, 3B, 3C, and 3D, a redundant description will be omitted.

According to an embodiment, the electromagnetic induction panel 300 may include an insulating layer 330, at least one first layer 340, and/or at least one second layer 350. Since each of the insulating layer 330, the at least one first layer 340, and/or the at least one second layer 350 of FIG. 4A, 4B, and/or 4C may be substantially the same as each of the insulating layer 330, the at least one first layer 340, and/or the at least one second layer 350 of FIG. 3B, 3C, and/or 3D, a redundant description will be omitted.

According to an embodiment, the at least one first layer 340 may include a first conductive layer 341, a first cover layer 342, and/or a first adhesive layer 343. Since each of the first conductive layer 341, the first cover layer 342, and/or the first adhesive layer 343 of FIG. 4C may be substantially the same as each of the first conductive layer 341, the first cover layer 342, and/or the first adhesive layer 343 of FIG. 3D, a redundant description will be omitted.

According to an embodiment, the at least one second layer 350 may include a second conductive layer 351, a second cover layer 352, a first shielding layer 353, a plurality of adhesive layers 355, and/or a second shielding layer 356. Since each of the second conductive layer 351, the second cover layer 352, and the first shielding layer 353 of FIG. 4C may be substantially the same as the second conductive layer 351, the second cover layer 352, and the first shielding layer 353 of FIG. 3D, a redundant description will be omitted.

According to an embodiment, the second cover layer 352 may be disposed on the second conductive layer 351. The second cover layer 352 may be disposed above the second conductive layer 351. The second cover layer 352 may be disposed in a first folding region 301, a first planar region 302, a second folding region 303, and a second planar region 304. For example, the second cover layer 352 may define substantially one plane in the first folding region 301 and the first planar region 302. For example, the second cover layer 352 may define substantially one plane in the second folding region 303 and the second planar region 304. According to an embodiment, a distance between the second conductive layer 351 and a first portion 352a of the second cover layer 352 disposed in the first folding region 301 may be substantially the same as a distance between the second conductive layer 351 and a second portion 352b of the second cover layer 352 disposed in the first planar region 302. A distance between the second conductive layer 351 and a third portion 352c of the second cover layer 352 disposed in the second folding region 303 may be substantially the same as a distance between the second conductive layer 351 and a fourth portion 352d of the second cover layer 352 disposed in the second planar region 304.

According to an embodiment, the plurality of adhesive layers 355 may include a second adhesive layer 355a, a third adhesive layer 355b, a sixth adhesive layer 355e, and/or a seventh adhesive layer 355f. Since each of the second adhesive layer 355a and the third adhesive layer 355b of FIG. 4C may be substantially the same as the second adhesive layer 355a and the third adhesive layer 355b of FIG. 3D, a redundant description will be omitted.

According to an embodiment, the sixth adhesive layer 355e may attach the second conductive layer 351 to the second cover layer 352 in the first folding region 301 and the second folding region 303. The sixth adhesive layer 355e may be interposed between the second conductive layer 351 and the second cover layer 352 in the first folding region 301 and the second folding region 303. For example, the sixth adhesive layer 355e may be interposed between the first portion 352a of the second cover layer 352 disposed in the first folding region 301 and the second conductive layer 351. For example, the sixth adhesive layer 355e may be interposed between the third portion 352c of the second cover layer 352 disposed in the second folding region 303 and the second conductive layer 351. According to an embodiment, the sixth adhesive layer 355e may define substantially one layer with the second adhesive layer 355a disposed in the first planar region 302 and the second planar region 304. For example, when the electromagnetic induction panel 300 is manufactured, the sixth adhesive layer 355e may be formed as substantially one layer with the second adhesive layer 355a disposed in the first planar region 302 and the second planar region 304. For example, a thickness of the sixth adhesive layer 355e may be approximately 12 µm, but is not limited thereto.

According to an embodiment, the seventh adhesive layer 355f may attach the second shielding layer 356 to the second cover layer 352 in the first folding region 301 and the second folding region 303. The seventh adhesive layer 355f may be interposed between the second shielding layer 356 and the second cover layer 352 in the first folding region 301 and the second folding region 303. For example, the seventh adhesive layer 355f may be interposed between the second shielding layer 356 and the first portion 352a of the second cover layer 352 disposed in the first folding region 301. For example, the seventh adhesive layer 355f may be interposed between the second shielding layer 356 and the third portion 352c of the second cover layer 352 disposed in the second folding region 303. According to an embodiment, the seventh adhesive layer 355f may define substantially one layer with the third adhesive layer 355b disposed in the first planar region 302 and the second planar region 304. For example, when the electromagnetic induction panel 300 is manufactured, the seventh adhesive layer 355f may be formed as substantially one layer with the third adhesive layer 355f disposed in the first planar region 302 and the second planar region 304. For example, the seventh adhesive layer 355f may include a pressure sensitive adhesive (PSA), but is not limited thereto. For example, a thickness of the seventh adhesive layer 355f may be approximately 7 µm, but is not limited thereto.

According to an embodiment, the second shielding layer 356 may shield an electromagnetic wave from the electromagnetic induction panel 300. The second shielding layer 356 may shield an electromagnetic wave generated from a first conductive pattern 310 and/or a second conductive pattern 320. For example, the second shielding layer 356 may include magnetic metal powder (MMP). The metal powder may include, for example, at least one selected from among iron, aluminum, nickel, silicon, or a combination thereof. The second shielding layer 356 may be disposed on the second cover layer 352 in the first folding region 301 and the second folding region 303. For example, the second shielding layer 356 may be disposed on the first portion 352a of the second cover layer 352 disposed in the first folding region 301. For example, the second shielding layer 356 may be disposed on the third portion 352c of the second cover layer 352 disposed in the second folding region 303. The second shielding layer 356 may be disposed over the hinge structure 250. For example, the second shielding layer 356 may be disposed over a surface 252a of a first hinge plate 252 and a surface 253a of a second hinge plate 253. As the second shielding layer 356 is included in the at least one second layer 350 disposed below the insulating layer 330, a neutral surface n1 may be defined below the insulating layer 330, in the first folding region 301 and the second folding region 303. In the first folding region 301 and the second folding region 303, the neutral surface n1 may be defined in the second conductive layer 351 by the second shielding layer 356. For example, by the second shielding layer 356, in the first folding region 301 and the second folding region 303, the number of layers in the at least one second layer 350 may be greater than the number of layers in the at least one first layer 340. For example, by the second shielding layer 356, in the first folding region 301 and the second folding region 303, the at least one second layer 350 may be thicker than the at least one first layer 340.

According to an embodiment, the second shielding layer 356 may define a step with respect to the first shielding layer 353 disposed in the first planar region 302 and in the second planar region 304. For example, a thickness of the second shielding layer 356 may be thinner than a thickness of the first shielding layer 353. For example, the thickness of the second shielding layer 356 may be 20 µm, but is not limited thereto. In case that the thickness of the second shielding layer 356 is the same as the thickness of the first shielding layer 353, thicknesses of the first folding region 301 and the second folding region 303 may be relatively thick. In case that the thicknesses of the first folding region 301 and the second folding region 303 are relatively thick, damage due to stress in the first folding region 301 and the second folding region 303 may increase. In case that the thickness of the second shielding layer 356 is the same as the thickness of the first shielding layer 353, since the thickness of the at least one second layer 350 is excessively increased, damage to the first conductive layer 341 may be generated due to the stress as a distance between the neutral surface n1 and the first conductive layer 341 increases. The electronic device 200 according to an embodiment may provide a structure capable of reducing damage to the electromagnetic induction panel 300 while shielding the electromagnetic wave from the electromagnetic induction panel 300 by the second shielding layer 356 thinner than the thickness of the first shielding layer 353.

According to an embodiment, the plurality of shielding members 410 may shield an electromagnetic wave from the first folding region 301 and the second folding region 303. A thickness of the plurality of shielding members 410 may correspond to the thickness of the second shielding layer 356. For example, the thickness of the plurality of shielding members 410 may be substantially the same as the thickness of the second shielding layer 356.

As described above, the electronic device 200 according to an embodiment may provide the structure capable of reducing damage to the electromagnetic induction panel 300 due to stress generated by a change in a state of the electronic device 200 by the second shielding layer 356 included in the at least one second layer 350. The electronic device 200 according to an embodiment may provide the structure capable of reducing damage to the electromagnetic induction panel 300 while shielding the electromagnetic wave from the electromagnetic induction panel 300 by the second shielding layer 356 having a thickness thinner than the first shielding layer 353.

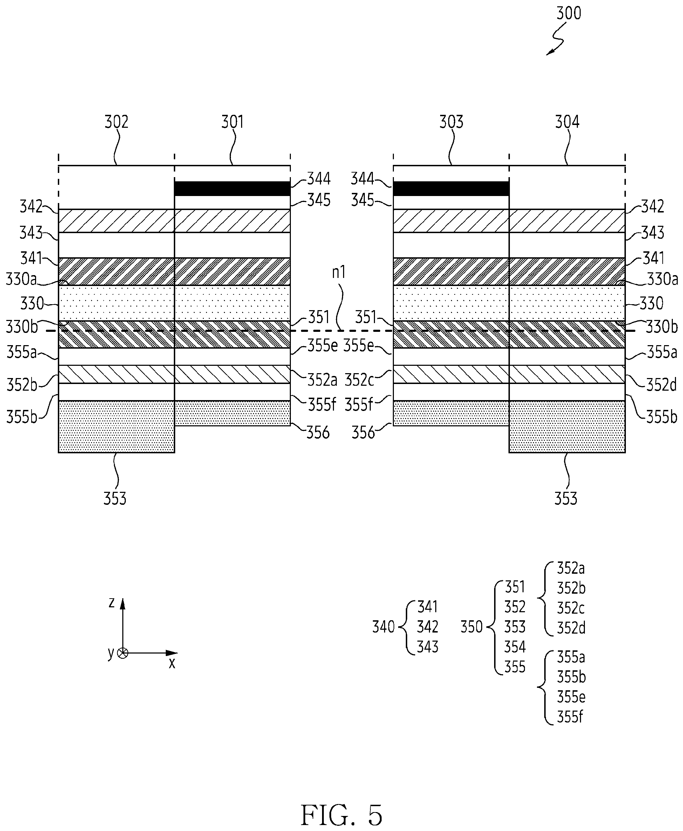

FIG. 5 is a cross-sectional view illustrating an example of cutting an exemplary electromagnetic induction panel, according to an embodiment.

Since an electromagnetic induction panel 300 of FIG. 5 may be the electromagnetic induction panel 300 to which a reinforcing layer 344 is added from the electromagnetic induction panel 300 of FIG. 4C, a redundant description will be omitted.

Referring to FIG. 5, according to an embodiment, the electromagnetic induction panel 300 may include an insulating layer 330, at least one first layer 340, and/or at least one second layer 350. Since each of the insulating layer 330, the at least one first layer 340, and/or the at least one second layer 350 of FIG. 5 may be substantially the same as each of the insulating layer 330, the at least one first layer 340, and/or the at least one second layer 350 of FIG. 4C, a redundant description will be omitted.

According to an embodiment, the at least one first layer 340 may include a first conductive layer 341, a first cover layer 342, a first adhesive layer 343, the reinforcing layer 344, and/or an eighth adhesive layer 345. Since each of the first conductive layer 341, the first cover layer 342, and/or the first adhesive layer 343 of FIG. 5 may be substantially the same as each of the first conductive layer 341, the first cover layer 342, and/or the first adhesive layer 343 of FIG. 4C, a redundant description will be omitted.

According to an embodiment, the reinforcing layer 344 may reinforce rigidity of a first folding region 301 and a second folding region 303. For example, the reinforcing layer 344 may include a stainless used steel (SUS), but is not limited thereto. The reinforcing layer 344 may be disposed in the first folding region 301 and the second folding region 303. The reinforcing layer 344 may be disposed outside a first planar region 302 and a second planar region 304. For example, the reinforcing layer 344 may be disposed on a portion of the first cover layer 342 disposed in the first folding region 301. For example, the reinforcing layer 344 may be disposed on a portion of the first cover layer 342 disposed in the second folding region 303. According to an embodiment, the reinforcing layer 344 may be disposed above the first cover layer 342 in the first folding region 301 and the second folding region 303. For example, the reinforcing layer 344 may be spaced apart from the portion of the first cover layer 342 disposed in the first folding region 301. For example, the reinforcing layer 344 may be spaced apart from the portion of the first cover layer 342 disposed in the second folding region 303. For example, a thickness of the reinforcing layer 344 may be 7.5 µm, but is not limited thereto.

According to an embodiment, the eighth adhesive layer 345 may attach the reinforcing layer 344 on the first cover layer 342. The eighth adhesive layer 345 may be interposed between the reinforcing layer 344 and the first cover layer 342. For example, the eighth adhesive layer 345 may be interposed between the reinforcing layer 344 and the portion of the first cover layer 342 disposed in the first folding region 301. For example, the eighth adhesive layer 345 may be interposed between the reinforcing layer 344 and the portion of the first cover layer 342 disposed in the second folding region 303. For example, a thickness of the eighth adhesive layer 345 may be 5 µm, but is not limited thereto.

According to an embodiment, the at least one second layer 350 may include a second conductive layer 351, a second cover layer 352, a first shielding layer 353, a plurality of adhesive layers 355, and/or a second shielding layer 356. Sine each of the second conductive layer 351, the second cover layer 352, the first shielding layer 353, the plurality of adhesive layers 355, and/or the second shielding layer 356 of FIG. 5 may be substantially the same as each of the second conductive layer 351, the second cover layer 352, the first shielding layer 353, the plurality of adhesive layers 355, and/or the second shielding layer 356 of FIG. 4C, a redundant description will be omitted.

According to an embodiment, the plurality of adhesive layers 355 may include a second adhesive layer 355a, a third adhesive layer 355b, a sixth adhesive layer 355e, and/or a seventh adhesive layer 355f. Since the second adhesive layer 355a, the third adhesive layer 355b, the sixth adhesive layer 355e, and/or the seventh adhesive layer 355f of FIG. 5 may be substantially the same as the second adhesive layer 355a, the third adhesive layer 355b, the sixth adhesive layer 355e, and/or the seventh adhesive layer 355f of FIG. 4C, a redundant description will be omitted.

According to an embodiment, the second shielding layer 356 included in the at least one second layer 350 may be thicker than the reinforcing layer 344 included in the at least one first layer 340. A thickness of the second shielding layer 356 included in the at least one second layer 350 may be thicker than a thickness of the reinforcing layer 344 included in the at least one first layer 340. As the thickness of the second shielding layer 356 is thicker than the thickness of the reinforcing layer 344, in the first folding region 301 and the second folding region 303, the at least one second layer 350 may be thicker than the at least one first layer 340. As the at least one second layer 350 is thicker than the at least one first layer 340, in the first folding region 301 and the second folding region 303, a neutral surface n1 may be positioned below the insulating layer 330. As the neutral surface n1 is formed below the insulating layer 330, damage to the electromagnetic induction panel 300 due to stress generated by a change in a state of an electronic device (e.g., the electronic device 200 of FIG. 3A, FIG. 3B, and FIG. 3C) may be reduced.

As described above, the electronic device 200 according to an embodiment may provide a structure capable of reducing the damage of the electromagnetic induction panel 300 while reinforcing rigidity of the at least one first layer 340 since the reinforcing layer 344 in the at least one first layer 340 is thinner than the second shielding layer 356 in the at least one second layer 350.

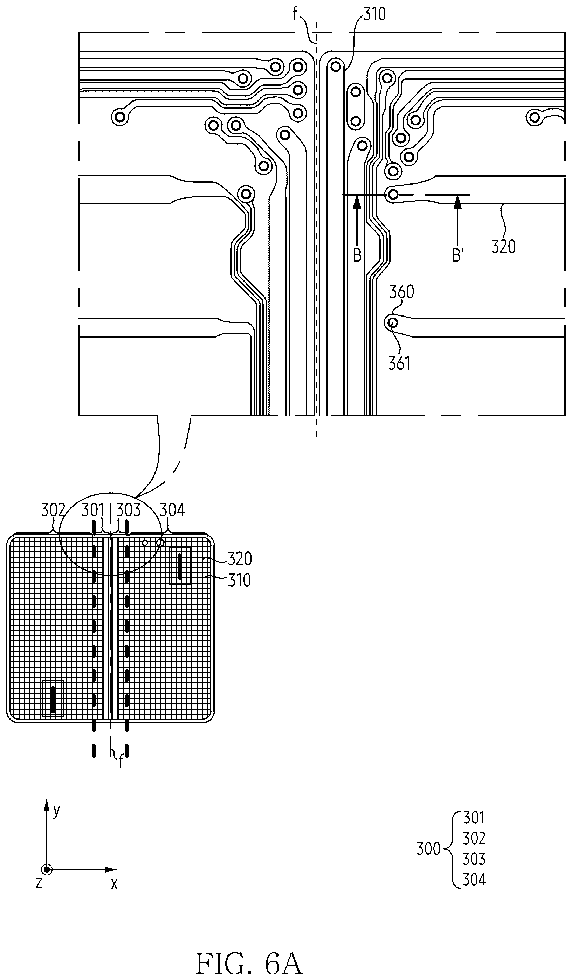

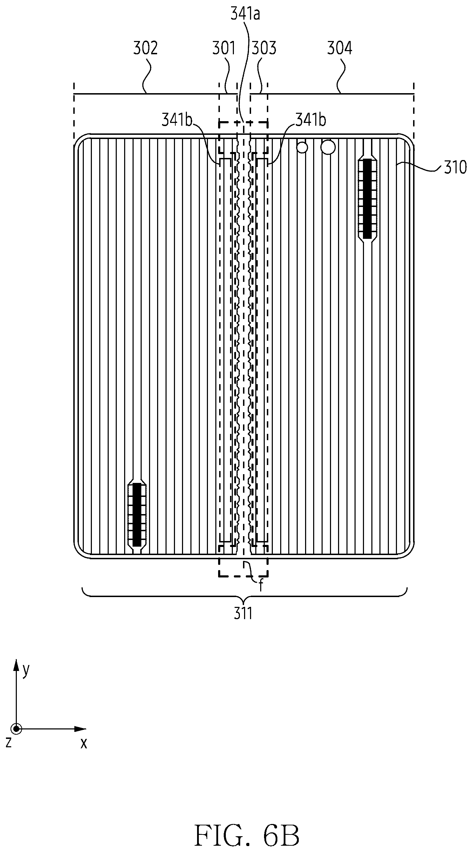

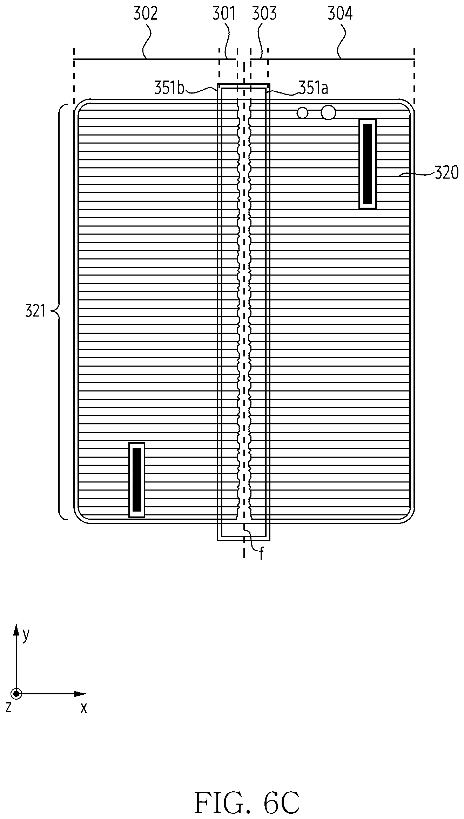

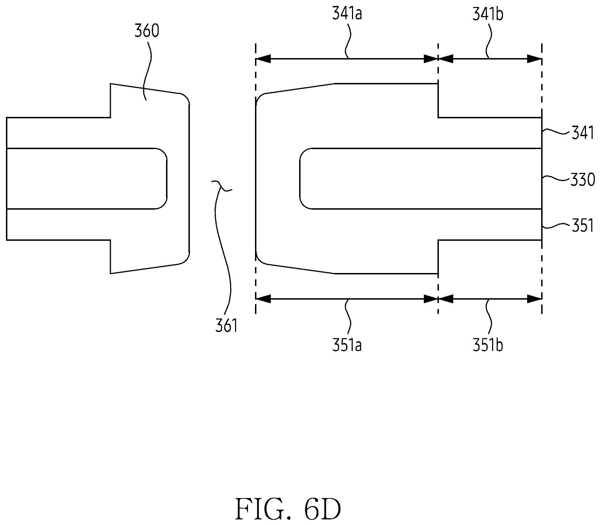

FIG. 6A is a top plan view of an electronic device in an unfolded state, according to an embodiment, FIG. 6B is a top plan view of a first conductive pattern of an exemplary electromagnetic induction panel, according to an embodiment, FIG. 6C is a top plan view of a second conductive pattern of an exemplary electromagnetic induction panel, according to an embodiment, and FIG. 6D is a cross-sectional view illustrating an example of an exemplary electromagnetic induction panel cut along line B-B' of FIG. 6A, according to an embodiment.

Referring to FIGS. 6A, 6B, 6C, and 6D, according to the embodiment, a first conductive pattern 310 may be disposed in a first conductive layer 341. The first conductive pattern 310 may extend along a direction (e.g., a +y direction or a -y direction) parallel to a folding axis f. According to an embodiment, the first conductive pattern 310 may include a plurality of first conductive patterns 311 spaced apart from each other. For example, the plurality of first conductive patterns 311 may be spaced apart from each other in a direction (e.g., a -x direction or a +x direction) perpendicular to the folding axis f. The plurality of first conductive patterns 311 may be disposed in a first folding region 301, a first planar region 302, a second folding region 303, and/or a second planar region 304.

According to an embodiment, a second conductive pattern 320 may be disposed in a second conductive layer 351. The second conductive pattern 320 may be disposed below the first conductive pattern 310. The second conductive pattern 320 may extend along the direction (e.g., the -x direction or the +x direction) perpendicular to the folding axis f. According to an embodiment, the second conductive pattern 320 may include a plurality of second conductive patterns 321 spaced apart from each other. For example, the plurality of second conductive patterns 321 may be spaced apart from each other in the direction (e.g., the +y direction or the -y direction) parallel to the folding axis f. The plurality of second conductive patterns 321 may be disposed in the first folding region 301, the first planar region 302, the second folding region 303, and/or the second planar region 304.

According to an embodiment, when an electronic device 200 is viewed from above, the first conductive pattern 310 and the second conductive pattern 320 may overlap each other. For example, when the electronic device 200 is viewed from above, each of the plurality of first conductive patterns 311 may overlap each of the plurality of second conductive patterns 321. The plurality of second conductive patterns 321 may cross the plurality of first conductive patterns 311. As the plurality of second conductive patterns 321 and the plurality of first conductive patterns 311 cross each other, the electronic device 200 (or the processor 120 of FIG. 1) may provide a designated function based on identifying a position of a portion of the plurality of second conductive patterns 321 and the plurality of first conductive patterns 311 that have received a signal from an electronic pen (e.g., the electronic pen p of FIG. 3B).

According to an embodiment, the electromagnetic induction panel 300 may include a plurality of conductive vias 360. The plurality of conductive vias 360 may electrically connect the first conductive pattern 310 and the second conductive pattern 320. Each of the plurality of conductive vias 360 may surround each of a plurality of via holes 361 penetrating the first conductive layer 341, an insulating layer 330, and the second conductive layer 351. For example, the plurality of conductive vias 360 may include a conductive material (e.g., metal). The plurality of conductive vias 360 may extend from the first conductive layer 341 in which the first conductive pattern 310 is formed to the second conductive layer 351 in which the second conductive pattern 320 is formed. According to an embodiment, the plurality of conductive vias 360 may be disposed in the first folding region 301 and the second folding region 303. For example, the plurality of conductive vias 360 may be spaced apart from each other in the first folding region 301 and the second folding region 303.

According to an embodiment, the first conductive layer 341 may include a first portion 341a and a second portion 341b. The first portion 341a of the first conductive layer 341 may be adjacent to the plurality of conductive vias 360 in the first folding region 301 and the second folding region 303. The first portion 341a of the first conductive layer 341 may include a region of the first conductive layer 341 in which the plurality of conductive vias 360 in the first folding region 01 and the second folding region 303 are disposed. According to an embodiment, the first portion 341a of the first conductive layer 341 may be disposed in the first folding region 301 and the second folding region 303. The second portion 341b of the first conductive layer 341 may mean another region of the first conductive layer 341 distinguished from the first portion 341a of the first conductive layer 341 in the first folding region 301 and the second folding region 303. For example, the second portion 341b of the first conductive layer 341 may mean the other region of the first conductive layer 341 excluding the first portion 341a of the first conductive layer 341 in the first folding region 301 and the second folding region 303.

According to an embodiment, a thickness of a portion of the first conductive layer 341 disposed in the first folding region 301 may be thinner than a thickness of another portion of the first conductive layer 341 disposed in the first planar region 302. For example, when the first conductive layer 341 is manufactured, the portion of the first conductive layer 341 disposed in the first folding region 301 may be formed through a conductive layer for forming the first conductive layer 341. For example, when the first conductive layer 341 is manufactured, the other portion of the first conductive layer 341 disposed in the first planar region 302 may be formed as another conductive layer is plated on the conductive layer for forming the first conductive layer 341. As a thickness of the first conductive layer 341 decreases, damage due to stress of the first conductive layer 341 may be reduced. Since a thickness of the first conductive layer 341 in the first folding region 301 is thinner than a thickness of the first conductive layer 341 in the first planar region 302, the damage to the first conductive layer 341 due to the stress generated when a state of the electronic device 200 changes may be reduced.

According to an embodiment, a thickness of the first portion 341a of the first conductive layer 341 in which the plurality of conductive vias 360 are disposed may be thicker than a thickness of the second portion 341b of the first conductive layer 341. For example, the thickness of the first portion 341a of the first conductive layer 341 may be approximately 14 µm, and the thickness of the second portion 341b of the first conductive layer 341 may be approximately 6 µm, but are not limited thereto. For example, the plurality of conductive vias 360 may be formed through a button plating process. As the plurality of conductive vias 360 is formed through button plating, since a conductive member for forming each of the plurality of conductive vias 360 is added to the first portion 341a of the first conductive layer 341, the thickness of the first portion 341a of the first conductive layer 341 may be thicker than the thickness of the second portion 341b of the first conductive layer 341. As the thickness of the first conductive layer 341 decreases, since electrical resistance of the first conductive layer 341 may increase, the thickness of the first conductive layer 341 may be set to facilitate an operation of the electromagnetic induction panel 300. The electronic device 200 according to an embodiment may provide a structure capable of reducing damage to the electromagnetic induction panel 300 while the operation of the electromagnetic induction panel 300 is smooth by the first portion 341a thicker than the second portion 341b of the first conductive layer 341 disposed in the first folding region 301.

According to an embodiment, the second conductive layer 351 may include a third portion 351a and a fourth portion 351b. The third portion 351a of the second conductive layer 351 may be adjacent to the plurality of conductive vias 360 in the first folding region 301 and the second folding region 303. The third portion 351a of the second conductive layer 351 may include a region of the second conductive layer 351 in which the plurality of conductive vias 360 in the first folding region 301 and the second folding region 303 are disposed. For example, the third portion 351a of the second conductive layer 351 may surround the plurality of conductive vias 360 in the first folding region 301 and the second folding region 303. According to an embodiment, the third portion 351a of the second conductive layer 351 may be disposed in the first folding region 301 and the second folding region 303. The fourth portion 351b of the second conductive layer 351 may mean another region of the second conductive layer 351 distinguished from the third portion 351a of the second conductive layer 351 in the first folding region 301 and the second folding region 303. For example, the fourth portion 351b of the second conductive layer 351 may mean the other region of the second conductive layer 351 excluding the third portion 351a of the second conductive layer 351 in the first folding region 301 and the second folding region 303.

According to an embodiment, a thickness of a portion of the second conductive layer 351 disposed in the first folding region 301 may be thinner than a thickness of another portion of the second conductive layer 351 disposed in the first planar region 302. For example, when the second conductive layer 351 is manufactured, the portion of the second conductive layer 351 disposed in the first folding region 301 may be formed through a conductive layer for forming the second conductive layer 351. For example, when the second conductive layer 351 is manufactured, the other portion of the second conductive layer 351 disposed in the first planar region 302 may be formed as another conductive layer is plated on the conductive layer for forming the second conductive layer 351. As the thickness of the second conductive layer 351 decreases, damage to the second conductive layer 351 due to stress may be reduced. Since a thickness of the second conductive layer 351 in the first folding region 301 is thinner than a thickness of the second conductive layer 351 in the first planar region 302, the damage to the second conductive layer 351 due to the stress generated when the state of the electronic device 200 changes may be reduced.

According to an embodiment, a thickness of the third portion 351a of the second conductive layer 351 in which the plurality of conductive vias 360 are disposed may be thicker than a thickness of the fourth portion 351b of the second conductive layer 351. For example, the thickness of the third portion 351a of the second conductive layer 351 may be approximately 14 µm, and the thickness of the fourth portion 351b of the second conductive layer 351 may be approximately 6 µm, but are not limited thereto. For example, the plurality of conductive vias 360 may be formed through the button plating process. As the plurality of conductive vias 360 is formed through the button plating, since a conductive member for forming each of the plurality of conductive vias 360 is added to the third portion 351a of the second conductive layer 351, the thickness of the third portion 351a of the second conductive layer 351 may be thicker than the thickness of the fourth portion 351b of the second conductive layer 351. As the thickness of the second conductive layer 351 decreases, since electrical resistance of the second conductive layer 351 may increase, the thickness of the second conductive layer 351 may be set to facilitate the operation of the electromagnetic induction panel 300. The electronic device 200 according to an embodiment may provide the structure capable of reducing the damage to the electromagnetic induction panel 300 while the operation of the electromagnetic induction panel 300 is smooth by the third portion 351a thicker than the fourth portion 351b of the second conductive layer 351 disposed in the first folding region 301.

According to an embodiment, when the electromagnetic induction panel 300 is viewed from above, a size of the first portion 341a of the first conductive layer 341 may be smaller than a size of the third portion 351a of the second conductive layer 351. For example, when the electromagnetic induction panel 300 is viewed from above, an area of the first portion 341a of the first conductive layer 341 may be smaller than an area of the third portion 351a of the second conductive layer 351. For example, when the electromagnetic induction panel 300 is viewed from above, the first portion 341a of the first conductive layer 341 may be surrounded by the third portion 351a of the second conductive layer 351. As the electromagnetic induction panel 300 is deformed with respect to the folding axis f, since the first conductive layer 341 in which the first conductive pattern 310 parallel to the folding axis f is formed is more robust to the stress than the second conductive layer 351 in which the second conductive pattern 320 perpendicular to the folding axis f is formed, the size of the first portion 341a of the first conductive layer 341 may be smaller than the size of the third portion 351a of the second conductive layer 351.

As described above, the electronic device 200 according to an embodiment may provide the structure capable of reducing the damage to the electromagnetic induction panel 300 by the first conductive layer 341 and the second conductive layer 351 that have a non-uniform thickness, in the first folding region 301 and the second folding region 303.

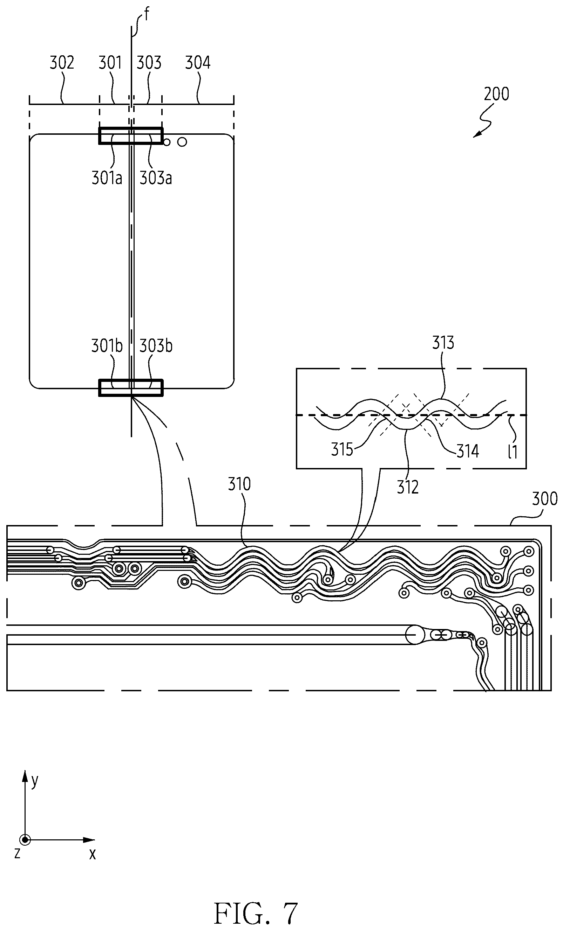

FIG. 7 is a top plan view of an electronic device in an unfolded state, according to an embodiment.

Referring to FIG. 7, according to an embodiment, at least one of a first conductive pattern 310 and a second conductive pattern (e.g., the second conductive pattern 320 of FIG. 3A) may include a first curved portion 312, a second curved portion 313, a first connecting portion 314, and/or a second connecting portion 315.

According to an embodiment, the first curved portion 312 may be bent with a curvature with respect to a first direction (e.g., a +x direction or a -x direction) perpendicular to a folding axis f. The first curved portion 312 may be bent with a curvature with respect to a virtual line l1 extending in the first direction perpendicular to the folding axis f. The first curved portion 312 may be spaced apart from the virtual line 11 along a second direction (e.g., a -y direction) parallel to the folding axis f. For example, the first curved portion 312 may have a quadrant shape spaced apart from the virtual line l1, but is not limited thereto. According to an embodiment, the first curved portion 312 may include a plurality of first curved portions spaced apart from each other along the first direction (e.g., the +x direction or the -x direction).

According to an embodiment, the second curved portion 313 may be spaced apart from the first curved portion 312. For example, the second curved portion 313 may be spaced apart from the first curved portion 312 along the first direction. The second curved portion 313 may have a symmetrical shape with respect to the first curved portion 312 based on the first direction (e.g., the +x direction or the -x direction). The second curved portion 313 may be bent with a curvature with respect to the virtual line 11 extending in the first direction perpendicular to the folding axis f. For example, the second curved portion 313 may be spaced apart from the virtual line l1 in a third direction (e.g., a +y direction) opposite to the second direction (e.g., the -y direction). For example, the second curved portion 313 may have a quadrant shape spaced apart from the virtual line l1 along the third direction, but is not limited thereto. According to an embodiment, the second curved portion 313 may include a plurality of second curved portions spaced apart from each other along the first direction (e.g., the +x direction or the -x direction).

According to an embodiment, the first connecting portion 314 may connect the first curved portion 312 and the second curved portion 313. The first connecting portion 314 may extend from the first curved portion 312 to the second curved portion 313. For example, the first connecting portion 314 may extend along a fourth direction inclined with respect to the first direction (e.g., the +x direction or the -x direction). According to an embodiment, when the first curved portion 312 and the second curved portion 313 are plural, the first connecting portion 314 may connect an end of each of the plurality of second curved portions from an end of each of the plurality of first curved portions along the fourth direction having a slope with respect to the first direction.

According to an embodiment, the second connecting portion 315 may connect the first curved portion 312 and the second curved portion 313. The second connecting portion 315 may extend from the first curved portion 312 to the second curved portion 313. For example, the second connecting portion 315 may extend in a fifth direction inclined with respect to the first direction (e.g., the +x direction or the -x direction) and the fourth direction. According to an embodiment, when the first curved portion 312 and the second curved portion 313 are plural, the second connecting portion 315 may extend from another end of each of the plurality of first curved portions to another end of each of the plurality of second curved portions along the fifth direction having a slope with respect to the first direction and the fourth direction.

According to an embodiment, the first curved portion 312, the second curved portion 313, the first connecting portion 314, and the second connecting portion 315 may be disposed along peripheries 301a and 301b of a first folding region 301 perpendicular to the folding axis f. For example, damage to the first conductive pattern 310 due to stress generated by a change in a state of an electronic device 200 may be reduced by the first curved portion 312 and the second curved portion 313 that extend with a curvature along the peripheries 301a and 301b of the first folding region 301 perpendicular to the folding axis f. The first curved portion 312, the second curved portion 313, the first connecting portion 314, and the second connecting portion 315 may be disposed along peripheries 303a and 303b of a second folding region 303 perpendicular to the folding axis f. For example, the damage to the first conductive pattern 310 due to the stress generated by the change in the state of the electronic device 200 may be reduced by the first curved portion 312 and the second curved portion 313 that extend with a curvature along the peripheries 303a and 303b of the second folding area 303 perpendicular to the folding axis f.

As described above, the electronic device 200 according to an embodiment may provide a structure capable of reducing damage to the first folding region 301 and the second folding region 303 due to the stress, by the first curved portion 312 and the second curved portion 313 having a curvature with respect to the first direction perpendicular to the folding axis f.

As a display of an electronic device is folded, an electromagnetic induction panel disposed in the electronic device may be folded as the display is folded. When the electromagnetic induction panel is folded, stress may be applied to at least one conductive pattern disposed in the electromagnetic induction panel. When the stress is applied to the at least one conductive pattern, the electromagnetic induction panel may be damaged. The electronic devices may need a structure to reduce the damage to the electromagnetic induction panel due to the stress generated by repetition of folding of the display.

An electronic device (e.g., the electronic device 200 of FIG. 3A, FIG. 3B, and FIG. 3C) according to an embodiment may comprise a first housing (e.g., the first housing 210 of FIG. 3A, FIG. 3B, and FIG. 3C). According to an embodiment, the electronic device may comprise a second housing (e.g., the second housing 220 of FIG. 3A, FIG. 3B, and FIG. 3C). According to an embodiment, the electronic device may comprise a hinge structure (e.g., the hinge structure 250 of FIG. 3A, FIG. 3B, and FIG. 3C) that, by rotatably connecting the first housing and the second housing, allows the first housing and the second housing to transition between a folded state in which a surface (e.g., the first surface 211 of FIG. 3A, FIG. 3B, and FIG. 3C) of the first housing faces a surface (e.g., the third surface 221 of FIG. 3A, FIG. 3B, and FIG. 3C) of the second housing, and an unfolded state in which a direction in which the surface of the first housing faces is the same as a direction in which the surface of the second housing faces. According to an embodiment, the electronic device may comprise a display (e.g., the display 230 of FIG. 3A, FIG. 3B, and FIG. 3C) disposed above the surface of the first housing and the surface of the second housing across the hinge structure. According to an embodiment, the electronic device may comprise an electromagnetic induction panel (e.g., the electromagnetic induction panel 300 of FIGS. 3A, 3B, 3C, and 3D) configured to receive an input from an electronic pen (e.g., the electronic pen p of FIG. 3B), the electromagnetic induction panel including a first folding region (e.g., the first folding region 301 of FIGS. 3A, 3B, and 3C), disposed between the display and the hinge structure, deformable by the hinge structure, and a first planar region (e.g., the first planar region 302 of FIGS. 3A, 3B, and 3C), connected to the first folding region, disposed between the display and the surface of the first housing. According to an embodiment, the electromagnetic induction panel may include an insulating layer (e.g., the insulating layer 330 of FIG. 3D) disposed in the first folding region and the first planar region. According to an embodiment, the electromagnetic induction panel may include at least one first layer (e.g., the at least one first layer 340 of FIG. 3D), including a first conductive pattern (e.g., the first conductive pattern 310 of FIG. 3A), disposed above the insulating layer. According to an embodiment, the electromagnetic induction panel may include at least one second layer (e.g., the at least one second layer 350 of FIG. 3D), including a second conductive pattern (e.g., the second conductive pattern 320 of FIG. 3A), disposed below the insulating layer. According to an embodiment, a thickness of the at least one second layer in the first folding region may be thicker than a thickness of the at least one first layer in the first folding region.

Since the at least one second layer disposed below the insulating layer is thicker than the at least one first layer disposed above the insulating layer, the electronic device according to an embodiment may provide a structure capable of reducing damage to the first conductive pattern and the second conductive pattern.

According to an embodiment, the at least one second layer may include a shielding layer (e.g., the first shielding layer 353 of FIG. 3D) disposed above the surface of the first housing to be disposed outside the first folding region.

Since the first folding region is thinner than the first planar region by the first shielding layer disposed outside the first folding region, the electronic device according to an embodiment may provide the structure capable of reducing the damage to the first conductive pattern and the second conductive pattern.

According to an embodiment, the electronic device may comprise a shielding member (e.g., the plurality of shielding members 410 of FIG. 3B and FIG. 3C), spaced apart from a portion of the at least one second layer that is disposed in the first folding layer, attached on the hinge structure, and separated from the shielding layer.

The electronic device according to an embodiment may provide a structure capable of reducing damage to the electromagnetic induction panel while shielding an electromagnetic wave from the electromagnetic induction panel by the shielding member spaced apart from the at least one second layer by being attached on the hinge structure.

According to an embodiment, the at least one first layer may include a first conductive layer (e.g., the first conductive layer 341 of FIG. 3D), including the first conductive pattern, disposed on a surface of the insulating layer. According to an embodiment, the at least one first layer may include a first cover layer (e.g., the first cover layer 342 of FIG. 3D) disposed on the first conductive layer. According to an embodiment, the at least one second layer may include a second conductive layer (e.g., the second conductive layer 351 of FIG. 3D), including the second conductive pattern, disposed on another surface of the insulating layer opposite to the surface of the insulating layer. According to an embodiment, the at least one second layer may include a second cover layer (e.g., the second cover layer 352 of FIG. 3D) disposed on the second conductive layer. According to an embodiment, the at least one second layer may include a reinforcing layer (e.g., the reinforcing layer 354 of FIG. 3D) interposed between the second cover layer and the second conductive layer.

The electronic device according to an embodiment may provide the structure capable of reducing the damage to the electromagnetic induction panel due to stress generated by a change in a state of the electronic device, by the at least one second layer including the reinforcing layer.

According to an embodiment, the electromagnetic induction panel may include a first shielding layer (e.g., the first shielding layer 353 of FIG. 3D) disposed on the surface of the first housing to be disposed outside the first folding region. According to an embodiment, the at least one first layer may include a first conductive layer (e.g., the first conductive layer 341 of FIG. 3D), including the first conductive pattern, disposed on a surface of the insulating layer. According to an embodiment, the at least one first layer may include a first cover layer (e.g., the first cover layer 342 of FIG. 3D) disposed on the first conductive layer. According to an embodiment, the at least one first layer may include a reinforcing layer (e.g., the reinforcing layer 344 of FIG. 5) disposed on a portion of the first cover layer that is disposed in the first folding region. According to an embodiment, the at least one first layer may include a second conductive layer (e.g., the second conductive layer 351 of FIG. 3D), including the second conductive pattern, disposed on another surface of the insulating layer opposite to the surface of the insulating layer. According to an embodiment, the at least one first layer may include a second cover layer (e.g., the second cover layer 352 of FIG. 3D) disposed on the second conductive layer. According to an embodiment, the at least one first layer may include a second shielding layer (e.g., the second shielding layer 356 of FIG. 3D), disposed on a portion of the second cover layer that is disposed in the first folding region, being thicker than the reinforcing layer.

The electronic device according to an embodiment may provide the structure capable of reducing the damage to the electromagnetic induction panel due to the stress generated by the change in the state of the electronic device by the at least one second layer including the second shielding layer thicker than the reinforcing layer in the at least one first layer.

According to an embodiment, a thickness of the second shielding layer may be thinner than a thickness of the first shielding layer. According to an embodiment, the electronic device may comprise a shielding member (e.g., the plurality of shielding members 410 of FIG. 3B and FIG. 3C), spaced apart from the second shielding layer, attached on the hinge structure, and separated from the first shielding layer.

The electronic device according to an embodiment may provide the structure capable of reducing the damage to the electromagnetic induction panel while shielding the electromagnetic wave from the electromagnetic induction panel, by the shielding member separated from the first shielding layer.

According to an embodiment, the hinge structure may include a hinge bracket (e.g., the hinge bracket 255 of FIG. 3B and FIG. 3C). According to an embodiment, the hinge structure may include a first hinge plate (e.g., the first hinge plate 252 of FIG. 3B and FIG. 3C) rotatable with respect to the hinge bracket. According to an embodiment, the hinge structure may include a second hinge plate (e.g., the second hinge plate 253 of FIG. 3B and FIG. 3C) rotatable with respect to the hinge bracket. According to an embodiment, in the unfolded state, a direction in which a surface of the first hinge plate faces may be the same as a direction in which a surface of the second hinge plate faces. According to an embodiment, in the folded stated, a direction in which the surface of the first hinge plate faces may be inclined with respect to a direction in which the surface of the second hinge plate faces.

Since the first hinge plate and the second hinge plate are inclined with respect to each other in the folded state of the electronic device, the electronic device according to an embodiment may provide a structure in which a change in curvature of the display is gentle.

According to an embodiment, in the folded state, a portion of the first folding region disposed on the first hinge plate may have an incline with respect to the first planar region disposed on the surface of the first housing.

According to an embodiment, when the state of the electronic device is changed to the folded state from the unfolded state, a rotating angle of the first hinge plate relative to the hinge bracket may be greater than a rotating angle of the second housing relative to the first housing.

Since the first hinge plate and the first housing have different rotation angles, the electronic device according to an embodiment may provide the structure in which the change in curvature of the display is gentle.

According to an embodiment, the electromagnetic induction panel may include a second folding region (e.g., the second folding region 303 of FIG. 3A, FIG. 3B, and FIG. 3C), separated from the first folding region, disposed between the display and the hinge structure, and deformable by the hinge structure. According to an embodiment, the electromagnetic induction panel may include a second planar region (e.g., the second planar region 304 of FIG. 3A, FIG. 3B, and FIG. 3C), connected to the second folding region, disposed between the display and the surface of the second housing. According to an embodiment, the insulating layer, the at least one first layer, and the at least one second layer may be included in the second folding region and the second planar region. According to an embodiment, a thickness of the at least one second layer in the second folding region may be thicker than a thickness of the at least one first layer in the second folding region.

Since the at least one second layer disposed below the insulating layer is thicker than the at least one first layer disposed above the insulating layer, the electronic device according to an embodiment may provide the structure capable of reducing the damage to the first conductive pattern and the second conductive pattern.

According to an embodiment, the electronic device may comprise a guide member (e.g., the guide member 420 of FIG. 3B and FIG. 3C), disposed between the first folding region and the second folding region to support the first folding region and the second folding region, disposed above the hinge structure.

The electronic device according to an embodiment may provide a structure capable of guiding a change in shape of the first folding region and the second folding region by the guide member disposed between the first folding region and the second folding region.

According to an embodiment, the guide member may be attached to one of the first folding region and the second folding region.

The electronic device according to an embodiment may provide the structure capable of guiding the change in shape of the first folding region and the second folding region by the guide member attached to one of the first folding region and the second folding region.

According to an embodiment, the at least one first layer may include a first conductive layer (e.g., the first conductive layer 341 of FIG. 3D), including the first conductive pattern, disposed on a surface of the insulating layer. According to an embodiment, the at least one first layer may include a first cover layer (e.g., the first cover layer 342 of FIG. 3D) disposed on the first conductive layer. According to an embodiment, the at least one second layer may include a second conductive layer (e.g., the second conductive layer 351 of FIG. 3D), including the second conductive pattern, disposed on another surface of the insulating layer opposite to the surface of the insulating layer. According to an embodiment, the at least one second layer may include a second cover layer (e.g., the second cover layer 352 of FIG. 3D) disposed on the second conductive layer. According to an embodiment, the electromagnetic induction panel may include a plurality of conductive vias (e.g., the plurality of conductive vias 360 of FIG. 6A and FIG. 6D), disposed in the first folding region, extending from the first conductive layer to the second conductive layer to connect the first conductive pattern and the second conductive pattern. According to an embodiment, a thickness of a first portion (e.g., the first portion 341a of FIG. 6A and FIG. 6D) of the first conductive layer on which the plurality of the conductive vias are disposed may be thicker than a thickness of a second portion (e.g., the second portion 341b of FIG. 6A and FIG. 6D) of the first conductive layer distinct from the first portion. According to an embodiment, a thickness of a third portion (e.g., the third portion 351a of FIG. 6A and FIG. 6D) of the second conductive layer on which the plurality of the conductive vias are disposed may be thicker than a thickness of a fourth portion (e.g., the fourth portion 351b of FIG. 6A and FIG. 6D) of the second conductive layer distinct from the third portion.

Since the thickness of the second portion excluding the first portion is thinner than the thickness of the first portion corresponding to positions of the plurality of conductive vias, the electronic device according to an embodiment may provide a structure in which an operation of the electromagnetic induction panel is smooth while reducing the damage to the electromagnetic induction panel. Since the thickness of the fourth portion excluding the third portion is thinner than the thickness of the third portion corresponding to positions of the plurality of conductive vias, the electronic device according to an embodiment may provide the structure in which the operation of the electromagnetic induction panel is smooth while reducing the damage to the electromagnetic induction panel.

According to an embodiment, the first conductive pattern may extend in a direction parallel to a folding axis defined by the hinge structure. According to an embodiment, the second conductive pattern may extend a direction perpendicular to the folding axis. According to an embodiment, when the electromagnetic induction panel is viewed from above, a size of the first portion is smaller than a size of the third portion.

According to an embodiment, at least one of the first conductive pattern or the second conductive pattern may include a first curved portion (e.g., the first curved portion 312 of FIG. 7) bent with a curvature with respect to a first direction perpendicular to a folding axis defined by the hinge structure. According to an embodiment, at least one of the first conductive pattern or the second conductive pattern may include a second curved portion (e.g., the second curved portion 313 of FIG. 7), spaced apart from the first curved portion, having a symmetrical shape to the first curved portion based on the first direction. According to an embodiment, at least one of the first conductive pattern or the second conductive pattern may include a connecting portion (e.g., the first connecting portion 314 of FIG. 7) extending along a second direction inclined with respect to the first direction to connect the first curved portion and the second curved portion.

Since a portion of the first conductive pattern is bent with curvature, the electronic device according to an embodiment may provide the structure capable of reducing the damage to the electromagnetic induction panel due to the stress.

An electronic device (e.g., the electronic device 200 of FIGS. 3A, 3B, and 3C) according to an embodiment may comprise a first housing (e.g., the first housing 210 of FIGS. 3A, 3B, and 3C) including a first surface (e.g., the first surface 211 of FIGS. 3B and 3C) and a second surface (e.g., the second surface 212 of FIGS. 2A and 2C) opposite to the first surface. According to an embodiment, the electronic device may comprise a second housing (e.g., a second housing 220 of FIGS. 3A, 3B, and 3C) including a third surface (e.g., the third surface 221 of FIGS. 3B and 3C) and a fourth surface (e.g., the fourth surface 222 of FIGS. 2A and 2C) opposite to the third surface. According to an embodiment, the electronic device may comprise a hinge structure (e.g., the hinge structure 250 of FIG. 3A, FIG. 3B, and FIG. 3C) that, by rotatably connecting the first housing and the second housing, allows the first housing and the second housing to transition between a folded state in which the first surface faces the third surface, and an unfolded state in which a direction in which the first surface faces is the same as a direction in which the third surface faces. According to an embodiment, the electronic device may comprise a display (e.g., the display 230 of FIG. 3A, FIG. 3B, and FIG. 3C), disposed above the first surface and the third surface across the hinge structure, being foldable with respect to a folding axis. According to an embodiment, the electronic device may comprise an electromagnetic induction panel (e.g., the electromagnetic induction panel 300 of FIGS. 3A, 3B, 3C, and 3D) configured to receive an input from an electronic pen, the electromagnetic induction panel including a first folding region (e.g., the first folding region 301 of FIGS. 3A, 3B, and 3C) disposed between the display and the hinge structure, deformable by the hinge structure, and a first planar region (e.g., the first planar region 302 of FIGS. 3A, 3B, and 3C), connected to the first folding region, disposed between the display and the first surface. According to an embodiment, the electromagnetic induction panel may include an insulating layer (e.g., the insulating layer 330 of FIG. 3D) disposed in the first folding region and the first planar region. According to an embodiment, the electromagnetic induction panel may include at least one first layer (e.g., the at least one first layer 340 of FIG. 3D), including a plurality of first conductive patterns (e.g., the plurality of first conductive patterns 311 of FIG. 6A and FIG. 6B) extending along a direction parallel to the folding axis, disposed above the insulating layer. According to an embodiment, the electromagnetic induction panel may include at least one second layer (e.g., the at least one second layer 350 of FIG. 3D), including a plurality of second conductive patterns (e.g., the plurality of second conductive patterns 320 of FIG. 6A and FIG. 6B) extending along a direction perpendicular to the folding axis, disposed below the insulating layer. According to an embodiment, a thickness of the at least one second layer in the first folding region may be thicker than a thickness of the at least one first layer in the first folding region.

Since the at least one second layer disposed below the insulating layer is thicker than the at least one first layer disposed above the insulating layer, the electronic device according to an embodiment may provide a structure capable of reducing damage to the first conductive pattern and the second conductive pattern.

According to an embodiment, the electromagnetic induction panel may include a shielding layer (e.g., the first shielding layer 353 of FIG. 3D) disposed above the first surface to be disposed outside the first folding region.

Since the first folding region is thinner than the first planar region by the first shielding layer disposed outside the first folding region, the electronic device according to an embodiment may provide the structure capable of reducing the damage to the first conductive pattern and the second conductive pattern.

According to an embodiment, the at least one first layer may include a first conductive layer (e.g., the first conductive layer 341 of FIG. 3D), including the plurality of first conductive patterns, disposed on a surface of the insulating layer. According to an embodiment, the at least one first layer may include a first cover layer (e.g., the first cover layer 342 of FIG. 3D) disposed on the first conductive layer. According to an embodiment, the at least one second layer may include a second conductive layer (e.g., the second conductive layer 351 of FIG. 3D), including the plurality of second conductive patterns, disposed on another surface of the insulating layer opposite to the surface of the insulating layer. According to an embodiment, the at least one second layer may include a second cover layer (e.g., the second cover layer 352 of FIG. 3D) disposed on the second conductive layer. According to an embodiment, the at least one second layer may include a reinforcing layer (e.g., the reinforcing layer 354 of FIG. 3D) disposed on a portion of the second cover layer in the first folding region.

The electronic device according to an embodiment may provide a structure capable of reducing damage to the electromagnetic induction panel due to stress generated by a change in a state of the electronic device by the at least one second layer including the reinforcing layer.

According to an embodiment, the electromagnetic induction panel may include a first shielding layer (e.g., the first shielding layer 353 of FIG. 3D) disposed above the first surface to be disposed outside the first folding region. According to an embodiment, the at least one first layer may include a first conductive layer (e.g., the first conductive layer 341 of FIG. 3D), including the plurality of first conductive patterns, disposed on a surface of the insulating layer. According to an embodiment, the at least one first layer may include a first cover layer (e.g., the first cover layer 342 of FIG. 3D) disposed on the first conductive layer. According to an embodiment, the at least one first layer may include a reinforcing layer (e.g., the reinforcing layer 344 of FIG. 5) disposed on the first cover layer. According to an embodiment, the at least one second layer may include a second conductive layer (e.g., the second conductive layer 351 of FIG. 3D), including the plurality of second conductive patterns, disposed on another surface of the insulating layer opposite to the surface of the insulating layer. According to an embodiment, the at least one second layer may include a second cover layer (e.g., the second cover layer 352 of FIG. 3D) disposed on the second conductive layer. According to an embodiment, the at least one second layer may include a second shielding layer (e.g., the second shielding layer 356 of FIG. 3D), disposed on a portion of the second cover layer in the first folding region, being thicker than the reinforcing layer.

The electronic device according to an embodiment may provide the structure capable of reducing the damage to the electromagnetic induction panel due to the stress generated by the change in the state of the electronic device by the at least one second layer including the second shielding layer thicker than the reinforcing layer in the at least one first layer.

According to an embodiment, the hinge structure may include a hinge bracket (e.g., the hinge bracket 255 of FIG. 3B and FIG. 3C). According to an embodiment, the hinge structure may include a first hinge plate (e.g., the first hinge plate 252 of FIG. 3B and FIG. 3C) rotatable with respect to the hinge bracket. According to an embodiment, the hinge structure may include a second hinge plate (e.g., the second hinge plate 253 of FIG. 3B and FIG. 3C) rotatable with respect to the hinge bracket. According to an embodiment, in the unfolded state, a direction in which a surface of the first hinge plate faces may be the same as a direction in which a surface of the second hinge plate faces. According to an embodiment, in the folded state, a direction in which a surface of the first hinge plate faces may be inclined with respect to a direction in which a surface of the second hinge plate faces.

Since the first hinge plate and the second hinge plate are inclined with respect to each other in the folded state of the electronic device, the electronic device according to an embodiment may provide a structure in which a change in curvature of the display is gentle.

When an element is mentioned as being "on" another element, it should be understood that the element may be directly on the other element or that intervening elements may exist therebetween. In contrast, when an element is mentioned as being directly on another element, no intervening elements exist.

In addition, relative terms such as 'lower' or 'bottom' and 'upper' or 'top' may be used herein to describe a relationship between another component and one component, as illustrated in the drawing. The relative terms should be understood as further encompassing other directions of a device in addition to an orientation depicted in the drawings. For example, in case that the device in one of the drawings is turned upside down, elements described as being in a lower side than other elements may be oriented toward an upper side of the other elements. Therefore, the term 'lower' may include both a 'lower' orientation and an 'upper' orientation according to a specific orientation of the drawing. Similarly, in case that the device in one of the drawings is turned upside down, elements described as being 'below' or 'beneath' other elements may be oriented above the other elements. Accordingly, the term 'below' or 'beneath' may include both an 'upper' orientation or a 'lower' orientation.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101; 200) comprising:
a first housing (210);
a second housing (220);
a hinge structure (250) that, by rotatably coupling the first housing (210) and the second housing (220), allows the first housing (210) and the second housing (220) to transition between a folded state, in which a surface of the first housing (210) faces a surface of the second housing (220), and an unfolded state, in which a direction in which the surface of the first housing (210) faces is the same as a direction in which the surface of the second housing (220) faces;
a display (230) disposed above the surface of the first housing (210) and the surface of the second housing (220) across the hinge structure (250);
an electromagnetic induction panel (300) configured to receive an input from an electronic pen, the electromagnetic induction panel (300) including:
a first folding region (301), disposed between the display (230) and the hinge structure (250), deformable by the hinge structure (250), and
a first planar region (302), connected to the first folding region (301), disposed between the display (230) and the surface of the first housing (210);
wherein the electromagnetic induction panel (300) further includes:
an insulating layer (330) disposed in the first folding region (301) and the first planar region (302);
at least one first layer (340), including a first conductive pattern (310), disposed above the insulating layer (330); and
at least one second layer (350) including a second conductive pattern (320), disposed below the insulating layer (330), and
wherein a thickness of the at least one second layer (350) in the first folding region (301) is thicker than a thickness of the at least one first layer (340) in the first folding region (301).

2. The electronic device (101; 200) of claim 1,
wherein the at least one second layer (350) further includes a shielding layer (353) disposed above the surface of the first housing (210) to be disposed outside the first folding region (301).

3. The electronic device (101; 200) of any one of claim 1 and claim 2, further comprising:
a shielding member (411), spaced apart from a portion of the at least one second layer (350) that is disposed in the first folding layer(301), attached on the hinge structure (250), and separated from the shielding layer (353).

4. The electronic device (101; 200) of any one of claims 1 to 3,
wherein the at least one first layer (340) further includes:
a first conductive layer (341), including the first conductive pattern (310), disposed on a surface of the insulating layer (330); and
a first cover layer (342) disposed on the first conductive layer (341),
wherein the at least one second layer (350) further includes:
a second conductive layer (351), including the second conductive pattern (320), disposed on another surface of the insulating layer (330) opposite to the surface of the insulating layer (330);
a second cover layer (352) disposed on the second conductive layer (351); and
a reinforcing layer interposed between the second cover layer (352) and the second conductive layer (351).

5. The electronic device (101; 200) of any one of claims 1 to 4,
wherein the electromagnetic induction panel (300) further includes:
a first shielding layer (353) disposed on the surface of the first housing (210) to be disposed outside the first folding region (301),
wherein the at least one first layer (340) further includes:
a first conductive layer (341), including the first conductive pattern (310), disposed on a surface of the insulating layer (330);
a first cover layer (342) disposed on the first conductive layer (341); and
a reinforcing layer disposed on a portion of the first cover layer (342) that is disposed in the first folding region (301),
wherein the at least one second layer (350) further includes:
a second conductive layer (351), including the second conductive pattern (320), disposed on another surface of the insulating layer (330) opposite to the surface of the insulating layer (330);
a second cover layer (352) disposed on the second conductive layer (351); and
a second shielding layer (356), disposed on a portion of the second cover layer (352) that is disposed in the first folding region (301), being thicker than the reinforcing layer.

6. The electronic device (101; 200) of any one of claims 1 to 5,
wherein a thickness of the second shielding layer (356) is thinner than a thickness of the first shielding layer (353), and
wherein the electronic device (101; 200) further comprises:
a shielding member (411), spaced apart from the second shielding layer (356), attached on the hinge structure (250), and separated from the first shielding layer (353).

7. The electronic device (101; 200) of any one of claims 1 to 6,
wherein the hinge structure (250) includes:
a hinge bracket (255);
a first hinge plate (252) being rotatable with respect to the hinge bracket (255); and
a second hinge plate (253) being rotatable with respect to the hinge bracket (255),
wherein, in the unfolded state, a direction in which a surface of the first hinge plate (252) faces is the same as a direction in which a surface of the second hinge plate (253) faces, and
wherein, in the folded stated, a direction in which the surface of the first hinge plate (252) faces is inclined with respect to a direction in which the surface of the second hinge plate (253) faces.

8. The electronic device (101; 200) of any one of claims 1 to 7,
wherein, in the folded state, a portion of the first folding region (301) disposed on the first hinge plate (252) has an incline with respect to the first planar region (302) disposed on the surface of the first housing (210).

9. The electronic device (101; 200) of any one of claims 1 to 8,
wherein, when a state of the electronic device (101; 200) is changed to the folded state from the unfolded state, a rotating angle of the first hinge plate (252) relative to the hinge bracket (255) is greater than a rotating angle of the second housing (220) relative to the first housing (210).

10. The electronic device (101; 200) of any one of claims 1 to 9,
wherein the electromagnetic induction panel (300) includes:
a second folding region (303), separated from the first folding region (301), disposed between the display (230) and the hinge structure (250), and deformable by the hinge structure (250); and
a second planar region (304), connected to the second folding region (303), disposed between the display (230) and the surface of the second housing (220),
wherein the insulating layer (330), the at least one first layer (340), and the at least one second layer (350) are included in the second folding region (303) and the second planar region (304), and
wherein a thickness of the at least one second layer (350) in the second folding region (303) is thicker than a thickness of the at least one first layer (340) in the second folding region (303).

11. The electronic device (101; 200) of any one of claims 1 to 10, further comprising:
a guide member (420), disposed between the first folding region (301) and the second folding region (303) to support the first folding region (301) and the second folding region (303), disposed above the hinge structure (250).

12. The electronic device (101; 200) of any one of claims 1 to 11,
wherein the guide member (420) is attached to one of the first folding region (301) and the second folding region (303).

13. The electronic device (101; 200) of any one of claims 1 to 12,
wherein the at least one first layer (340) further includes:
a first conductive layer (341), including the first conductive pattern (310), disposed on a surface of the insulating layer (330); and
a first cover layer (342) disposed on the first conductive layer (341),
wherein the at least one second layer (350) further includes:
a second conductive layer (351), including the second conductive pattern (320), disposed on another surface of the insulating layer (330) opposite to the surface of the insulating layer (330); and
a second cover layer (352) disposed on the second conductive layer (351),
wherein the electromagnetic induction panel (300) further includes:
a plurality of conductive vias (360), disposed in the first folding region (301), extending from the first conductive layer (341) to the second conductive layer (351) to connect the first conductive pattern (310) and the second conductive pattern (320),
wherein a thickness of a first portion (341a) of the first conductive layer (341) on which the plurality of conductive vias (360) are disposed is thicker than a thickness of a second portion (341b) of the first conductive layer (341) distinct from the first portion, and
wherein a thickness of a third portion (351a) of the second conductive layer (351) on which the plurality of conductive vias (360) are disposed is thicker than a thickness of a fourth portion (351b) of the second conductive layer (351) distinct from the third portion (351a).

14. The electronic device (101; 200) of any one of claims 1 to 13,
wherein the first conductive pattern (310) extends in a direction parallel to a folding axis defined by the hinge structure (250),
wherein the second conductive pattern (320) extends a direction perpendicular to the folding axis, and
wherein, when the electromagnetic induction panel (300) is viewed from above, a size of the first portion (341a) is smaller than a size of the third portion (351a).

15. The electronic device (101; 200) of any one of claims 1 to 14,
wherein at least one of the first conductive pattern (310) or the second conductive pattern (320) includes:
a first curved portion (312) bent with a curvature with respect to a first direction perpendicular to a folding axis defined by the hinge structure (250);
a second curved portion (313), spaced apart from the first curved portion (312), having a symmetrical shape to the first curved portion (312) based on the first direction; and
a connecting portion (314) extending along a second direction inclined with respect to the first direction to connect the first curved portion (312) and the second curved portion (313).
